(19) Europäisches Patentamt
European Patent Office
Office européen des brevets

(11) EP 1 335 502 B1

(12) **EUROPEAN PATENT SPECIFICATION**

(45) Date of publication and mention of the grant of the patent:
**13.04.2011 Bulletin 2011/15**

(51) Int Cl.:
***H04B 7/005*** *(2006.01)* ***H04W 52/14*** *(2009.01)*

(21) Application number: **03002669.4**

(22) Date of filing: **11.02.2003**

(54) **Quality threshold setting method**

Qualitätspegeleinstellungsverfahren

Procédé de réglage de seuil de qualité

(84) Designated Contracting States:
**DE FR GB IT**

(30) Priority: **12.02.2002 JP 2002033296**

(43) Date of publication of application:
**13.08.2003 Bulletin 2003/33**

(60) Divisional application:
**09175908.4 / 2 151 929**

(73) Proprietor: **NEC Corporation**
**Minato-ku**
**Tokyo 108-8001 (JP)**

(72) Inventor: **Takano, Nahoko,**
**c/o NEC Corporation**
**Minato-ku,**
**Tokyo (JP)**

(74) Representative: **Betten & Resch**
**Patentanwälte**
**Theatinerstrasse 8**
**80333 München (DE)**

(56) References cited:
**EP-A- 0 884 918 WO-A-01/99462**

- **"Universal Mobile Telecommunications System (UMTS); Physical layer procedures (FDD) (3GPP TS 25.214 version 3.9.0 Release 1999); ETSI TS 125 214" ETSI STANDARDS, EUROPEAN TELECOMMUNICATIONS STANDARDS INSTITUTE, SOPHIA-ANTIPO, FR, vol. 3-R1, no. V390, December 2001 (2001-12), XP014008398 ISSN: 0000-0001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 335 502 B1

## Description

### BACKGROUND OF THE INVENTION

### Field of the Invention

The present invention relates to a quality threshold setting method and a communication controller using the method and, in particular, to a quality threshold setting method in a cellular system using DS-CDMA (Direct Spread-Code Division Multiple Access).

### Description of the Prior Art

In DS-CDMA-based cellular systems, a number of channels use the same frequency band and therefore a radio wave used in a channel may interfere with another radio wave used in another channel. An increase of interference degrades the reception quality of a desired wave, resulting in disconnection of the channel.

Thus, the number of channels, that is, the line capacity, that allows for communications while keeping required reception quality depends on the amount of interference. In an uplink, attenuation of the power of a signal sent from a mobile station far from a base station is larger than attenuation of the electric power of a signal sent from a mobile station near a desired station. Accordingly, if transmission is made by using the same power, a far-near effect may be caused in which an interference wave becomes greater than a desired wave, precluding the communication.

Therefore, transmission power control for controlling transmission power used in mobile stations is required in an uplink so that signals sent from the mobile stations have the same power when received at a base station.

In a downlink, on the other hand, no such far-near effect occurs. However, transmission power is controlled in base stations so that the minimum transmission power required for ensuring reception quality required at mobile stations while reducing interference with other channels. The transmission power control is closed-loop control. Measured reception quality is compared with predetermined targeted quality and a TPC (Transmit Power control) for causing transmission power to be lowered is sent if the measured reception quality is higher than the targeted quality or a TCP signal for causing the transmission power to be increased if the measured reception quality is lower than the target quality.

In most cellular systems using CDMA, a technology called soft handover is used. When a mobile station approaches a cell boundary and a difference between a propagation loss of a signal received from the base station with which a mobile station is communicating and that of a signal or signals received from an adjacent base station or stations becomes smaller than a predetermined threshold, soft handover allows the mobile station to be connected to those base stations and causes them to transmit signals.

Thus, the diversity effect attributed to the transmission from a plurality of base stations improves reception quality in an area near a cell boundary where a great propagation loss can occur and reception quality is apt to degrade. Because a link to a base station that is a candidate for the next base station to which a mobile station will be connected to is established before the link to the base station with which it is communicating is disconnected, a smooth handover without transmission interruption can be ensured.

However, there is a problem that interference increases and line capacity decreases in a downlink during soft handover in a downlink because a plurality of base stations make transmission. To solve the problem, a technology is proposed in Japanese Patent Laid-Open No. 11-69416 which allows a limited number of base stations in a group of base stations that are performing soft handover in order to reduce interference in a downlink.

Base stations send a common pilot signal with predetermined power and a radio network controller assigns a base station identifier to each of base stations that have established a link with a mobile station, measures the reception quality of the common pilot signals transmitted from the base stations with which the mobile stations has established the link, selects base stations that are transmitting pilot signals with higher reception quality as the base stations that are to make transmission (transmit base station), and multiplexes and sends a signal indicating the base station identifier of the transmit base stations (hereinafter referred to as a CW (Code Word)) together with a control signal over a uplink.

Among the base stations that have established a link, the base stations receiving a CW indicating its base station identifier make transmission over the downlink and the other base stations stops transmission. This technology allows only the base stations that can transmit signals with a smaller loss to perform transmission, reducing downlink interference and possibly increasing line capacity.

According to this technology, if the reception quality of a CW received at a base station specified as a transmit base station degrades and a CW reception error occurs, the base station may mistakenly determine that it is not a transmit station and stop transmission.

To avoid this, transmission power control according to "3GPP TS 25.214 v3.9.0 (2001-012) 3rd Generation Partnership Project; Technical Specification Group Radio Access Network; Physical layer procedures (FDD), pp.25, 5.2.1.4" uses a quality threshold, Qth, as the threshold for CW reception quality.

If a base station to which a link is established receives a CW with reception quality lower than a quality threshold Qth, it determines that it is a transmit station and transmits a signal over a downlink regardless of the low reception quality CW. This avoids degradation of the downlink which would otherwise be caused by a base station specified as a transmit base station mistakenly determining that it is not a transmit station due to a degraded CW it received and stopping transmission over the downlink.

However, according to this prior-art technology, a base station that is not a transmit base station determines that it is a transmit base station and performs transmission over a downlink if the reception quality of a CW is lower than the quality threshold Qth.

In general, base stations in which uplink reception quality degrades are likely to display a large propagation loss in a downlink and therefore likely to be a non-transmit-base-station in which CW reception quality degrades. Therefore, if a high quality-threshold Qth is set, non-transmit-base stations in which CW reception quality falls short of the quality threshold Qth, these base stations the propagation losses to which are large also make transmission over the downlink, thereby increasing interference and decreasing the line capacity.

However, a propagation loss in a downlink is smaller than that in an uplink because of a difference in fading variation between the downlink and uplink. Therefore, the reception quality of a CW transmitted over the uplink to a base station that is determined to be a transmit base station by a mobile station can be degraded. If a low quality-threshold Qth is set, the probability that a base station specified as a transmit base station stops transmission over the downlink due to a CW reception error in the base station becomes large. As a result, the downlink is degraded and its capacity is decreased.

That is, there is a problem that the quality threshold Qth is in a tradeoff between an increase in interference in the downlink due to transmission by a non-transmit-base-station and degradation of the downlink due to stoppage of transmission by a transmit base station. The optimum value of the quality threshold Qth depends on propagation environment conditions, that is, the reception quality of a CW or reception error rate in a base station to which link is established.

This will be described with respect to the travel velocity of a mobile station by way of example of such propagation environment conditions that affect an optimum quality-threshold Qth with reference to FIGS. 21 and 22. If the travel velocity of a mobile station is slow and therefore the intervals of reception level variations due to fading are long compared with transmit base station selecting intervals as shown in FIG. 21, downlink fading is uncorrelated with uplink fading even in a selected transmit cell (cell A) that provides the best reception quality in the downlink and therefore the quality of the uplink is likely to be low. In such a case, the probability of CW reception errors in a transmit base station is high, therefore a high quality-threshold Qth should be set.

On the other hand, if the intervals of reception level variations due to fading are short compared with transmit base station selecting intervals as shown in FIG. 22, a cell that provides a high reception level averaged among transmit base station selecting periods is selected as the transmit cell. Because the reception level of a CW transmitted over an uplink is such that fading variations are leveled, the effect of uncorrelation between uplink and downlink fading variations is small.

Therefore, a transmit base station that provides a small propagation loss on its downlink provides high reception quality of a CW over its uplink. Accordingly, the degree to which reception quality in the transmit station is degraded is small and reception quality in a non-transmit station is degraded to a large degree. Consequently, in such a case, a low quality-threshold Qth should be set to lower the probability that the quality of a non-transmit-base-station falls short of the quality threshold Qth and transmits and makes transmission over its downlink. Thus, the optimum quality-threshold Qth depends on the travel velocity.

An object of the present invention is to provide a method for setting a quality threshold that solves the problems described above and increases the line capacity of a downlink and a communication controller using the method.

WO 01/99462 A1 discloses a mobile communication control method. When a mobile station makes connections with a plurality of base stations during hand over, the number of the base stations that perform transmission is reduced and a base station that exhibits the best reception quality is caused to perform transmission, thereby reducing the downstream interference to increase the line capacity. In the mobile station, a reception monitor periodically measures pilot signals transmitted from base stations. Upon occurrence of a soft hand over condition, a speed estimating device estimates the moving speed of the local station at a predetermined time interval on the basis of the reception electric field intensity of the pilot signals. A control unit changes, in accordance with the estimated moving speed, both the time length for which to measure the pilot signals transmitted from the base stations and an internal threshold value for selecting a base station for transmission during the hand over. In that case, when the moving speed is low, the time length for measuring the pilot signals is shortened and the internal threshold value is reduced. When the moving speed is high, the time length for measuring the pilot signals is elongated and the internal threshold value is increased.

## SUMMARY OF THE INVENTION

The present invention is defined in the independent claims. The dependent claims define embodiments of the invention.

A quality threshold setting method according to one embodiment is a method for setting a quality threshold for a mobile communication system including a base station transmitting a common pilot signal by using predetermined power to one or more cells and a mobile station establishing a link to the base station in the one or more cells and measuring the reception quality of the common pilot signal transmitted from the base stations, comprising the step of changing the quality threshold according to propagation circumstances between the base station and the mobile station.

A communication controller according to one embodiment is a communication controller in amobile communication system including a base station that transmits a common pilot signal by using predetermined power to one or more cells and a mobile station that establishes a link to the base station in the one or more cells and measures the reception quality of the common pilot signal transmitted from the base stations. The communication controller is used for controlling the base station and comprises means for changing the quality threshold according to propagation circumstances between the base station and the mobile station.

The quality threshold setting method according to the present invention relates to setting a quality threshold for a mobile communication system including a base station transmitting a common pilot signal by using predetermined power to one or more cells and a mobile station establishing a link to the base station in the one or more cells and measuring the reception quality of the common pilot signal transmitted from the base stations.

The mobile station in the mobile communication system selects one or more transmit cells among cells to which the mobile station has established a link based on the result of the measurement and transmits a transmit cell specifying signal over an uplink. The base station to which the link has established measures the reception quality of the transmit cell specifying signal it received and, if the reception quality is higher than the predetermined quality threshold and a cell to which the base station makes transmission is specified as a transmit cell by the transmit cell specifying signal, makes transmission over a downlink. Otherwise, it stops at least part of transmission over the downlink. If the reception quality of the transmit cell specifying signal is lower than the predetermined quality threshold, the base station makes transmission over the downlink regardless of what is specified in the transmit cell specifying signal.

When used with the transmit power control method as described above, the quality threshold setting method of the present invention changes the quality threshold according to propagation circumstances. Thus, the quality threshold setting method according to the present invention can decrease the probability that the transmit base station stops transmission while decreasing the percentage of transmission by non-transmit base stations, thereby increasing the capacity of the downlink.

The communication controller according to the present invention is used in a mobile communication system including a base station transmitting a common pilot signal by using predetermined power to one or more cells and a mobile station establishing a link to the base station in the one or more cells and measuring the reception quality of the common pilot signal transmitted from the base stations.

The mobile station in the mobile communication system selects one or more transmit cells among cells to which the mobile station has established a link based on the result of the above measurement and transmits a transmit cell specifying signal over an uplink. The base station to which the link has established measures the reception quality of the transmit cell specifying signal it received and, if the reception quality is higher than the predetermined quality threshold and a cell to which the base station makes transmission is specified as a transmit cell by the transmit cell specifying signal, makes transmission over a downlink. Otherwise, it stops at least part of transmission over the downlink. If the reception quality of the transmit cell specifying signal is lower than the predetermined quality threshold, the base station makes transmission over the downlink regardless of what is specified in the transmit cell specifying signal.

A communication controller according to one embodiment controls a base station in which transmit power is controlled as described above so as to change its quality threshold according to propagation circumstances. Thus, the communication controller of the present invention can control a value of the quality threshold in base stations to which a link is established according to their propagation circumstances so that the probability that a transmit base station stops transmission while decreasing the percentage of transmission by non-transmit base stations, thereby increasing the capacity of the downlink.

## BRIEF DESCRIPTION OF THE DRAWINGS

FIG. 1 is a block diagram showing a configuration of a mobile communication system according to a first embodiment of the present invention;

FIG. 2 is a block diagram showing a configuration of a base station shown in FIG. 1;

FIG. 3 is a block diagram showing a configuration of a radio network controller shown in FIG. 1;

FIG. 4 is a flowchart of a process performed in a base station shown in FIG. 1;

FIG. 5 is a flowchart of a process performed in a communication controller shown in FIG. 3;

FIG. 6 is a block diagram showing a configuration of a mobile communication system according to a second embodiment of the present invention;

FIG. 7 is a block diagram showing a configuration of a base station shown in FIG. 6;

FIG. 8 is a flowchart of a process performed in the base station according to the second embodiment of the present invention;

FIG. 9 is a block diagram showing a configuration of a radio network controller according to a third embodiment of the present invention;

FIG. 10 is a flowchart of a process performed in a communication controller shown in FIG. 9;

FIG. 11 is a block diagram showing a configuration of a radio network controller according to a fourth embodiment of the present invention;

FIG. 12 is a flowchart showing a process performed in a communication controller shown in FIG. 11;

FIG. 13 is a block diagram showing a configuration of a radio network controller according to a fifth embodiment of the present invention;

FIG. 14 is a flowchart of a process performed in a communication controller shown in FIG. 13;

FIG. 15 is a block diagram showing a configuration of a radio network controller according to a sixth embodiment of the present invention;

FIG. 16 is a flowchart of a process performed in a communication controller shown in FIG. 15;

FIG. 17 is a block diagram showing a configuration of a radio network system according to a seventh embodiment of the present invention;

FIG. 18 is a flowchart of a process performed in a communication controller shown in FIG. 17;

FIG. 19 is a block diagram showing a configuration of a radio network controller according to an eighth embodiment of the present invention;

FIG. 20 is a flowchart of a process performed in a communication controller shown in FIG. 19;

FIG. 21 shows fading variations at different velocities; and

FIG. 22 shows fading variations at different velocities.

## DETAILED DESCRIPTION OF THE PREFERRED EMBODIMENTS

Embodiments of the present invention will be described below with reference to the accompanying drawings. FIG. 1 is a block diagram showing a configuration of a mobile communication system according to a first embodiment of the present invention. The mobile communication system according to the first embodiment of the present invention shown in FIG. 1 is a cellular system using DS-CDMA (Direct Spread-Code Division Multiple Access).

In the cellular system, mobile stations 2-1, 2-2, and 2-3 have established links to base stations 1-1, 1-2, and 1-3 in one or more cells. The reception level of a common pilot signal sent to each cell by the base stations 1-1, 1-2, 1-3 to which links are established is measured. Based on the results of this measurement, one or more transmit cells to which transmission is to be performed are selected and a signal for specifying the transmit cell (s) is sent over an uplink to notify the selected cell(s) to the base stations 1-1, 1-2, 1-3 to which the links are established.

The base stations 1-1, 1-2, 1-3 to which the links are established receive the transmit cell specifying signal and, if a cell to which they are performing transmission is specified as a transmit cell, perform transmission over a downlink to the cell. If a cell (non-transmit-cell) to which they are performing transmission is not specified as a transmit cell, they suspend at least a part of downlink transmission to the cell.

Each of the base stations 1-1, 1-2,1-3 can send a radio wave that is directive to three cells 201 to 203, 204 to 206, and 207 to 208, respectively, to communicate with the mobile stations 2-1, 2-2, 2-3 within the cells. The mobile stations 2-1, 2-2, 2-3 establish links to one of the base stations 1-1, 1-2, 1-3 which performs transmission to the cell in which it is located.

Each of the base stations 1-1, 1-2, 1-3 is connected to a radio network controller 3. A communication controller 31 is installed in the radio network controller 3 which sets parameters required for communication.

Each of the base station 1-1, 1-2, 1-3 sends a common pilot signal that has a predetermined power value and common to all the mobile stations 2-1, 2-2, 2-3 and sends a signal specific to each of the mobile stations 2-1, 2-2, 2-3. Each mobile station 2-1, 2-2, 2-3 sends a specific signal to one or more of the base stations 1-1, 1-2, 1-3 to which it has established a link. The transmit power values of these signals are controlled by high-speed closed-loop transmit power control.

The mobile station 2-1, 2-2, 2-3 measures the reception level of the common pilot signals sent from the base stations 1-1, 1-2, 1-3 and establish links in a cell that provides the highest reception level and a cell that provides a reception level differing from the highest reception level by less than a predetermined threshold.

If transmissions are made to mobile stations 2-1, 2-2, 2-3 over links in a plurality of cells, that is, in the case of soft handover, the radio network controller 3 assigns a cell identifier to each of the cells for identifying cells to which transmission is made and notifies the cell identifiers to base stations 1-1, 1-2, 1-3 and mobile stations 2-1, 2-2, 2-3 that make transmission to the cells.

A mobile station 2-1, 2-2, 2-3 periodically selects based on a predetermined criterion a cell in which the reception level of the common pilot signal is high as a transmit cell. Then the mobile station 2-1, 2-2, 2-3 sends the cell identifier of the transmit cell in a specific control signal over an uplink to notify it to the base station 1-1, 1-2, 1-3 to which a link is established.

Mobile station 2-1 near the center of cell 201 establishes a link only to base station 1-1 and receives transmission over the link in cell 201 because the reception level of the common pilot signal transmitted by base station 1-1 in cell 201 is highest and the difference between the highest level and the reception level of the common pilot signal transmitted in the other cells exceeds the predetermined threshold.

Mobile station 2-2, which is near the boundary of cells 203, 204, and 207, is in "soft handover" inwhich it has established a plurality of links simultaneously because the differences among the reception levels of the common pilot signal sent from base stations 1-1, 1-2, 1-3 to them are less than the predetermined threshold.

However, only cells 203 and 204 become transmit cells because the reception quality of the common pilot signal sent to cell 207 does not meet a predetermined criterion for determining transmit cells. Base stations 1-1 and 1-2 make transmission to mobile station 2-2 in their respective cells and base station 1-3 suspends transmission of a specific signal over a link in cell 207.

Mobile station 2-3, which is near the boundary of cells 207 and 208, is in "softer handover" (different from soft handover in which links are established to a plurality of base stations) in which it has established a plurality of links to base stations 1-3 because the difference between the reception levels of common pilot signal sent from base station 1-3 to cells 207 and 208 is less than the predetermined threshold. Because the reception quality of the common pilot signal sent to cell 208 does not meet the predetermined criterion for determining transmit cells, mobile station 2-3 specifies only cell 207 as a transmit cell. However, base station 1-3 also sends a specific signal to base station 203 in cell 208 because the reception quality of a CW (Code Word: a signal indicating the base station identifier of a transmit base station in an uplink) in cell 208 is lower than a predetermined quality threshold Qth.

FIG. 2 is a block diagram showing a configuration of a base station 1-1, 1-2, 1-3 shown in FIG. 1. The base station 1-1, 1-2, 1-3 in FIG. 2 comprises a receiving antenna 11 for receiving a radio signal sent from base stations 2-1, 2-2, 2-3, a duplexer (DUP) 12, a radio receiving unit (Rx) 13 for converting the radio signal into a receive baseband signal, a RAKE receiver 14 for combining base signals, a demultiplexer (DMUX) 15, a reception quality measuring unit 16 for measuring the reception quality of a signal demultiplexed by the demultiplexer 15, a transmit power controller 17 for controlling transmission power of the base station according to the cell identifier of a transmit cell specified in a CW, a multiplexer (MUX) 18, a spread circuit 19 outputting a transmit base signal, and a radio transmitting unit (Tx) 20 for converting the transmit base signal into a radio signal and transmitting it.

The reception quality measuring unit 16 measures the reception quality of a signal containing a CW demultiplexed by the demultiplexer 15, compares it with a quality threshold Qth notified by the radio network controller 3, and notifies the result to the transmit power controller 17.

If the quality of the received signal is lower than the quality threshold Qth, the transmit power controller 17 causes transmission to be made using a transmit power value according to ordinary high-speed closed-loop transmit power control without regard to the result of the received CW. On the other hand, if the quality of the received signal is higher than the quality threshold Qth, the transmit power controller 17 performs either of the following operations depending on the cell identifier specified in the CW. If the cell of the base station is specified as a transmit cell in the CW, the transmit power controller 17 causes transmission to be made to a link in that cell using a transmit power value according to the ordinary high-speed closed-loop transmit power control. If a cell specified in the CW is not the base station's cell, the transmit power controller 17 changes the transmit power to a predetermined minimum transmit power value and causes transmission to be made to a link in that cell.

FIG. 3 is a block diagram showing a configuration of the radio network controller 3 shown in FIG. 1. The radio network controller 3 in FIG. 3 comprises a receive processing unit 32, a controlling unit 33 for providing control over transmission and reception performed by base stations 1-1, 1-2, 1-3, a communication controller 31 for setting parameters, and a transmit processing unit 34.

The communication controller 31 comprises a CW length information extracting module 311 and a reception quality threshold setting module 312. The CW length information extracting module 311 extract information about the length of a bit stream of a CW transmitted over an uplink and notifies it to the reception quality threshold setting module 312. The longer a CW length notified, the lower quality threshold Qth is set by the reception quality threshold setting module 312. The set quality threshold Qth is multiplexed with an output signal to be sent to a base station 1-1, 1-2, 1-3 and notified to the base station 1-1, 1-2, 1-3.

FIG. 4 shows a flowchart of a process performed by a base station 1-1, 1-2, 1-3 shown in FIG. 1. A process performed by the base station 1-1, 1-2, 1-3 according to the first embodiment of the present invention will be described below with reference to FIGS. 1 to 4.

If it is predetermined CW receiving timing (step S1 in FIG. 4), then the base station 1-1, 1-2, 1-3 receives a CW sent from a mobile station 2-1, 2-2, 2-3 and the quality measuring unit 16 measures the reception quality of the CW (step S2 in FIG. 4). The reception quality measuring unit 16 compares the measured reception quality with a quality threshold Qth notified from the radio network controller 3 (step S3 in FIG. 4) and notifies the result of the comparison to the transmit power controller 17.

If the reception quality of the CW is lower than the quality threshold Qth (step S3 in FIG. 4), the transmit power controller 17 transmits a specific signal to a cell that has established a link to the base station 2-1, 2-2, 2-3 over the downlink by using a transmit power value controlled by ordinary high-speed closed-loop control (Step S4 in FIG. 4).

On the other hand, if the reception quality of the CW is higher than the quality threshold Qth (step S3 in FIG. 4), the transmit power controller 17 examines the cell identifier specified in the CW (step S5 in FIG. 4) and, if the cell identifier indicates a cell to which the own base station makes transmission (step S6 in FIG. 4), causes a specific signal to be transmitted with a transmit power value controlled by ordinary high-speed closed-loop control over a downlink (step S7 in FIG. 4).

If the cell identifier does not indicate the cell to which the own base station makes transmission (step S6 in FIG. 4), the transmit power controller 17 sets the transmit power for the downlink to a predetermined minimum transmit power value (step S8 in FIG. 4). The base station 1-1, 1-2, 1-3 periodically performs the transmit power control while the mobile station 2-1, 2-2, 2-3 is in handover.

FIG. 5 shows a flowchart of a process performed by the communication controller 31. The process performed by the communication controller 31 according to the first embodiment of the present invention will be described with reference to FIGS. 3 and 5.

When a new length of the bit stream of a CW (CW length) sent over an uplink is set (step S11 in FIG. 5), the CW length information extracting module 311 in the communication controller 31 extracts information about the CW length (step S12 in FIG. 5) and notifies it to the reception quality threshold setting module 312.

If the CW length provided from the CW length information extracting module 311 is greater than a predetermined CW length threshold Nth (the quality is poor) (step S13 in FIG. 5), then the reception quality threshold setting module 312 sets the quality threshold Qth to Qlow (step S14 in FIG. 5). On the other hand, if the CW length provided from the CW length information extracting module 311 is less than the predetermined CW length threshold Nth (the quality is good) (step S13 in FIG. 5), the reception quality threshold setting module 312 sets the quality threshold Qth to Qhigh (step S15 in FIG. 5). Here, Qlow < Qhigh.

The quality threshold Qth set by the reception quality threshold setting module 312 is multiplexed and notified with a signal to be outputted to the base station 1-1, 1-2, 1-3 (step S16 in FIG. 5).

Effects of the present embodiment will be described below. If the length (the number of bits) of the bit stream of the CW is short and the minimum intervals between CWs is short, the reception quality is poor and the probability that the CW is erroneously determined to be a different CW if a bit error occurs becomes high. That is, if the reception quality is the same, the shorter the length of a CW, the higher the reception error rate of the CW. According to the present embodiment, a high quality-threshold Qth can be set when a short CW length is set and a low quality-threshold Qth can be set when a long CW length is set.

Therefore, if it is unlikely that a CW reception error occurs even under the condition where the length of a CW is long and the reception quality is low, a low quality-threshold Qth can be set to minimize interference which would be caused by a non-transmit-cell which would make transmission over a downlink when the quality is lower than the quality threshold Qth. On the other hand, if it is likely that a CW reception error occurs even under the condition where the length of a CW is short and the reception quality is high, a high quality-threshold Qth can be set to inhibit degradation of the quality of the downlink which is caused by a transmit cell stopping transmission over the downlink due to a reception error. Thus, according to the present embodiment, degradation of and interference in downlinks can be minimized with reference to the length of CWs, thereby increasing the capacity of downlinks.

FIG. 6 is a block diagram showing a configuration of a mobile communication system according to a second embodiment of the present invention. The mobile communication system according to the second embodiment shown in FIG. 6 is the same as that of the mobile communication system according to the first embodiment shown in FIG. 1, except that communication controllers 41-1, 41-2, and 41-3 are provided in each of base stations 1-1, 1-2, and 1-3. The same components as those of the mobile communication system of the first embodiment are labeled with the same reference numbers. Operations of the same components as those in the first embodiment are also the same.

FIG. 7 is a block diagram showing a configuration of one of the base stations 1-1, 1-2, and 1-3 in FIG. 6. The configuration of the base station 1-1, 1-2, 1-3 shown in FIG. 7 is the same as that of the base station 1-1, 1-2, 1-3 according to the first embodiment shown in FIG. 2 except that it includes a communication controller 41 and the same components of the base station of the first embodiment are labeled with the same reference numbers. Operations of the same components as those in the first embodiment are also the same. While the communication controllers 41 are provided within the base station 1-1, 1-2, 1-3 in FIG. 7, the communication controller 41, 41-1, 41-2, 41-3 may be outside the base station 1-1, 1-2, 1-3 as shown in FIG. 6, provided that the communication controller 41, 41-1, 41-2, 41-3 are associated with base stations 1-1, 1-2, and 1-3.

The communication controller 41 comprises a CW length information extracting module 411 and a quality threshold setting module 412. The CW length information extracting module 411 extracts information about the length of the bit stream of a CW sent over an uplink and notifies it to the reception quality threshold setting module 412. The reception quality threshold setting module 412 determines the quality threshold based on the CW length and notifies it to the reception quality measuring module 16. The longer the CW length provided, the lower quality threshold Qth is set by the reception quality threshold setting module 412.

FIG. 8 shows a flowchart of a process performed by a base station 1-1, 1-2, 1-3 according to the second embodiment of the present invention. The process performed by the base station 1-1, 1-2, 1-3 according to the second embodiment of the present invention will be described with reference to FIGS. 6 to 8.

When a new length of the bit stream of CW (CW length) to be transmitted over an uplink is set (step S21 in FIG. 8), the CW length information extracting module 411 of the communication controller 41 associated with the base station 1-1, 1-2, 1-3 extracts information about the CW length (step S22 in FIG. 8) and notifies the information to the reception quality threshold setting module 412.

If the CW length notified by the CW length information extracting module 411 is less than a predetermined CW length thresholdNth (step S23 in FIG. 8), the reception quality threshold setting module 412 sets the quality threshold Qth to Qhigh (step S24 in FIG. 8). On the other hand, if the CW length notified by the CW length information extracting module 411 is greater than the predetermined CW length threshold (step S23 in FIG. 8), the reception quality threshold setting module 412 sets the quality threshold Qth to Qlow (step S25 in FIG. 8). Here, Qlow < Qhigh.

The quality threshold Qth determined by the reception quality setting module 412 is notified to a reception quality measuring unit 16 (step S26 in FIG. 8). If it is predetermined CW transmitting timing (step S27 in FIG. 8), the reception quality measuring unit 16 receives the CW sent from a mobile station 2-1, 2-2, 2-3 and measures the reception quality of the CW (step S28 in FIG. 8). The reception quality measuring unit 16 compares the measured reception quality with the quality threshold Qth (step S29 in FIG. 8) and notifies the result of the comparison to a transmit power controller 17.

If the reception quality of the CW is lower than the quality threshold Qth (step S29 in FIG. 8), the transmit power controller 17 transmits a specific signal to a cell that has established a link to the mobile station 2-2, 2-2, 2-3 over the downlink by using a transmit power value controlled by ordinary high-speed closed-loop control (step S30 in FIG. 8).

If the reception quality of the CW is higher than the quality threshold Qth (step S29 in FIG. 8), the transmit power controller 17 examine a cell identifier specified in the CW (step S31 in FIG. 8). If the cell identifier is a cell to which the base station makes transmission (step S32 in FIG. 8), then the transmit power controller 17 causes a specific signal to be transmitted over the downlink by using the ordinary high-speed closed-loop control (step S33 in FIG. 8).

If the cell identifier is not a cell to which the base station makes transmission (S32 in FIG. 8), the transmit power controller 17 changes the transmit power for the downlink to a predetermined minimum transmit power value (step S34 in FIG. 8). The transmit power control is periodically performed in the base station 1-1, 1-2, 1-3 while the mobile station 2-1, 2-2, 2-3 is in handover.

Unlike the first embodiment of the present invention in which the communication controller 31 of the radio network controller 3 determines a quality threshold based on the CW length information and notifies it to the base stations 1-1, 1-2, and 103, the base stations 1-1, 1-2, and 1-3 determine a quality threshold based on the length of a CW.

The effects of the present embodiment are the same as those of the first embodiment. Because an appropriate quality threshold Qth can be set according to the length of a CW, the probability of downlink transmission stoppage caused by a transmit cell due to a CW reception error can be minimized and the interference caused by a non-transmit cell which would make downlink transmission when its CW reception quality becomes lower than the quality threshold Qth can be reduced, thereby increasing the capacity of downlink.

FIG. 9 is a block diagram showing a configuration of a radio network controller according to a third embodiment of the present invention. The configuration of the radio network controller according to the third embodiment of the present invention shown in FIG. 9 is the same as that of the radio network controller of the first embodiment shown in FIG. 3, except that a communication controller 51 including a velocity information extracting module 511 and a reception quality threshold setting module 512 is provided. The same components as those in the first embodiment are labeled with the same reference numbers. The operations of the same components are the same as those in the first embodiment. The system configuration of the third embodiment of the present invention is the same as that of the first embodiment of the present invention shown in FIG. 1 and the configuration of a base station according to the third embodiment is the same as that of the base station 1-1, 1-2, 1-3 according to the first embodiment shown in FIG. 2.

The velocity information extracting module 511 extracts information about a travel velocity estimated by a mobile station 2-1, 2-2, 2-3 calculating the fading pitch from changes in reception electric field intensity and notifies the indications of the travel velocity to the reception quality threshold setting module 512. The reception quality threshold setting module 512 determines a quality threshold according to the travel velocity notified and multiplexes it with a signal to be outputted to the base station 1-1, 1-2, 1-3. The faster the notified velocity, the smaller the quality threshold set by the reception quality threshold setting module 512. The set quality threshold Qth is multiplexed and notified with the output signal to be transmitted to the base station 1-1, 1-2, 1-3.

FIG. 10 shows a flowchart of a process performed by the communication controller 51 shown in FIG. 9. The process performed by the communication controller 51 according to the third embodiment of the present invention will be described with reference to FIGS. 1, 2, 9, and 10.

At predetermined travel velocity information notification timing (step S41 in FIG. 10), the velocity information extracting module 511 of the communication controller 51 extracts travel velocity information sent from mobile station 2-1, 2-2, 2-3 (step S42 in FIG. 10) and notifies the information to the reception quality threshold setting module 512.

If the travel velocity notified by the velocity information extracting module 511 is lower than a predetermined velocity threshold Vth (step S43 in FIG. 10), the reception quality threshold setting module 512 sets the quality threshold Qth to Qhigh (step S44 in FIG. 10). On the other hand, if the travel velocity notified by the velocity information extracting module 511 is higher than a predetermined velocity threshold Vth (step S43 in FIG. 10), the reception quality threshold setting module 512 sets the quality threshold Qth to Qlow (step S45 in FIG. 10). Here, Qlow < Qhigh.

The quality threshold Qth determined by the reception quality threshold setting module 512 is multiplexed and notified with a signal to be outputted to the base station 1-1, 1-2, 1-3 (step S46 in FIG. 10).

The present embodiment enables a higher quality threshold Qth to be set when the travel velocity of a mobile station 2-1, 2-2, 2-3 is low and a lower quality threshold Qth to be set when the travel velocity of the mobile station 2-1, 2-2, 2-3 is high.

Thus, if the probability of degradation of the reception quality of an uplink is high even in a transmit cell in which the propagation loss on its downlink is small because the fading variation cycle is low compared with the transmit cell update cycle as described in the section under the title of "Problems to be solved," a higher quality threshold value Qth can be set to decrease the probability of downlink transmission stoppage caused by a CW reception error in the transmit cell and prevent the degradation of the downlink.

If the fading variation cycle is high compared with the transmit cell update cycle the fading variation is averaged and the probability of degradation of the reception quality of the uplink in a transmit cell in which the propagation loss is small in a downlink is high, a lower quality threshold Qth can be set to decrease the probability that the reception quality of a CW of a non-transmit cell becomes lower than the quality threshold Qth and the non-transmit cell makes transmission over the downlink. As a result, interference in the downlink can be reduced. Thus, the present embodiment can reduce the degradation of and interference in the downlink according to the velocity of mobile stations 2-1, 2-2, 2-3, thereby increasing the capacity of the downlink.

While the communication controller 51 including the velocity information extracting module 511 and reception quality threshold setting module 512 is provided in the radio network controller, the communication controller 51 may be provided in each base station 1-1, 1-2, and 1-3.

FIG. 11 is a block diagram showing a configuration of a radio network controller according to a fourth embodiment of the present invention. The configuration of the radio network controller according to the fourth embodiment of the present invention in FIG. 11 is the same as that of the radio network controller of the first embodiment of the present invention shown in FIG. 3, except that a communication controller 61 including a downlink target FER (frame error rate) information extracting module 611 and a reception quality threshold setting module 612 is provided. The same components as those of the first embodiment are labeled with the same reference number. Operations of the same components as those in the first embodiment are also the same. The system configuration of the fourth embodiment of the present invention is the same as the configuration of the cellular system according to the first embodiment of the present invention shown in FIG. 1. The configuration of a base station according to the fourth embodiment is the same as that of the base station 1-1, 1-2, 1-3 according to the first embodiment shown in FIG. 2.

The downlink target FER information extracting module 611 extracts information about the target FER of a downlink and notifies it to the reception quality threshold setting module 612. The reception quality threshold setting module 612 determines a quality threshold according to the target FER notified and multiplexes it with a signal to be outputted to the base station 1-1, 1-2, and 1-3. The lower the target FER notified, the smaller the quality threshold Qth set by the reception quality threshold setting module 612. The set quality threshold Qth is multiplexed and notified with the output signal transmitted to the base station 1-1, 1-2, 1-3.

FIG. 12 shows a flowchart of a process performed by the communication controller 61 shown in FIG. 11. The process performed by the communication controller 61 according to the fourth embodiment of the present invention will be described with reference to FIGS. 1, 2, 11, and 12.

When a new downlink target FER is set (S51 in FIG. 12), the downlink target FER information extracting module 611 of the communication controller 61 extracts information about the target FER (step S52 in FIG. 12) and notifies it to the reception quality threshold setting module 612.

If the target FER notified by the downlink target FER information extracting module 611 is higher than a predetermined FER threshold FERth (the quality is poor) (step S53 in FIG. 12), the reception quality threshold setting module 612 sets the quality threshold Qth to Qlow (step S54 in FIG. 12). On the other hand, if the target FER notified by the downlink target FER information extracting module 611 is lower than the predetermined FER threshold FERth (the quality is good) (S53 in FIG. 12), the reception quality threshold setting module 612 sets the quality threshold Qth to Qhigh (step S55 in FIG. 12). Here, Qlow < Qhigh.

The quality threshold Qth determined by the reception quality threshold setting module 612 is multiplexed and notified with a signal outputted to the base station 1-1, 1-2, 1-3 (step S56 in FIG. 12).

According to the present embodiment, if the target FER of a downlink is high (the quality is poor), a lower reception quality threshold of a CW transmitted over the uplink can be set to prevent interference caused by transmission over the downlink made by a non-transmit cell in which CW reception quality is degraded to a value lower than the quality threshold. If the target FER of the downlink is low (the quality is good), a higher CW reception quality threshold is set to prevent degradation of the downlink which would be caused by stoppage of transmission by a transmit cell due to a CW reception error.

In particular, if only one transmit cell is selected by a mobile station 2-1, 2-2, 2-3 and the transmit cell stops transmission due to a CW reception error in the cell, a state will result in which no base stations 1-1, 1-2, and 1-3 make transmission during the transmission period of that transmit cell. If the transmission period is set to a value longer than frame time, a reception error in the transmit cell always causes an error of the frame. The present embodiment can minimize reception errors in the transmit cell when a high downlink target FER is set, thereby achieving the target FER.

On the other hand, if the downlink target FER is low, transmission caused by a CW degradation of a non-transmit base station is minimized to reduce interference in the downlink while achieving the target FER. Thus, the present embodiment can minimize interference in the downlink and therefore increases the capacity of the downlink.

While the communication controller 61 including the downlink target FER information extracting module 611 and reception quality threshold setting module 612 is provided in the radio network controller, the communication controller 61 may be installed in the base stations 1-1, 1-2, and 1-3.

FIG. 13 is a block diagram showing a configuration of a radio network controller according to a fifth embodiment of the present invention. The configuration of the radio network controller according to the fifth embodiment of the present invention shown in FIG. 13 is the same as that of the radio network controller of the first embodiment of the present invention shown in FIG. 3, except that a communication controller 71 including a handover cell information extracting module 711 and a reception quality threshold setting module 712 is provided. The same components as those of the first embodiment are labeled with the same reference number. Operations of the same components as those in the first embodiment are also the same. The system configuration of the fifth embodiment of the present invention is the same as the configuration of the cellular system according to the first embodiment of the present invention shown in FIG. 1. The configuration of a base station according to the fifth embodiment is the same as that of the base station 1-1, 1-2, 1-3 according to the first embodiment shown in FIG. 2.

The handover cell information extracting module 711 extracts information about a cell in a handover state and notifies the information to the quality threshold setting module 712. The quality threshold setting module 712 sets a quality threshold Qth based on the information about the number of handover cells in each base station 1-1, 1-2, 1-3 which is notified from the handover cell information extracting module 711. The more cells in a handover state, the lower quality threshold Qth is set by the quality threshold setting module 712. The determined quality threshold Qth is multiplexed and notified with an output signal to be transmitted to each base station.

FIG. 14 is a flowchart of a process performed by the communication controller 71 shown in FIG. 13. The process performed by the communication controller 71 according to the fifth embodiment of the present invention will be described with reference to FIGS. 1, 2, 13, and 14.

When handover cells are changed (step S61 in FIG. 14), the handover cell information extracting module 711 of the communication controller 71 extracts information about the new handover cells (step S62 in FIG. 14) and notifies the information to the reception quality threshold setting module 712.

If the base station makes transmission to only one single cell among the handover cells notified by the handover cell information extracting module 711 (step S63 in FIG. 14), the reception quality threshold setting module 712 sets the quality threshold Qth to Qhigh (step S64 in FIG. 14). On the other hand, if the base station makes transmission to a plurality of cells among the handover cells notified by the handover cell information extraction module 711 (step S63 in FIG. 14), the reception quality threshold setting module 712 sets the quality threshold Qth to Qlow (step S65 in FIG. 14). Here, Qlow < Qhigh.

The quality threshold Qth determined in the reception quality threshold setting module 712 is multiplexed and notified with a signal to be provided to the base station 1-1, 1-2, 1-3 (step S66 in FIG. 14).

Effects of the present embodiment will be described below. According to the present embodiment, a higher quality threshold Qth can be set for a base station that makes transmission to only one cell among cells in handover and a lower quality threshold Qth can be set for a base station that makes transmission to a plurality of cells among the cells in handover.

When transmission is made between one base station and a plurality of cells among handover cells, that is, in the case of softer handover, CWs received from the cells over an uplink can be combined in the base station in most instances. Thus, a combined diversity effect can be produced and the probability of occurrence of a reception error is lower than that in a case where combined diversity effect cannot be produced, even if the reception quality of a CW is low. Therefore, according to the present embodiment, when the error rate of a CW is low in spite of a low reception quality of the CW in a softer handover state, a lower reception quality threshold can be set to reduce interference in a downlink due to transmission over the downlink made by a non-transmit base station with low CW reception quality.

In a base station that makes transmission to and from only one base station among handover cells and cannot produce the CW combined diversity effect, the CW quality threshold Qth can be raised to decrease the probability of transmission stoppage due to degradation in the reception quality of the CW in the transmit cell. Thus, the present invention can reduce degradation of and interference in the downlink according to CW combined diversity effect in each base station, thereby increasing the capacity of the downlink.

While the communication controller 71 including the handover cell information extracting module 711 and reception quality threshold setting module 712 is provided in the radio network controller, the communication controller 71 may be provided in each base station 1-1, 1-2, and 1-3.

FIG. 15 is a block diagram showing a configuration of radio network controller according to a sixth embodiment of the present invention. The configuration of the radio network controller according to the sixth embodiment of the present invention shown in FIG. 15 is the same as that of the radio network controller of the first embodiment of the present invention shown in FIG. 3, except that a communication controller 81 including a transmit cell determination criterion information extracting module 811 and a reception quality threshold setting module 812 is provided. The same components as those of the mobile communication system of the first embodiment are labeled with the same reference numbers. Operations of the same components as those in the first embodiment are also the same. The system configuration of the sixth embodiment of the present invention is the same as that of the cellular system of the first embodiment of the present invention shown in FIG. 1. The configuration of a base station according to the sixth embodiment of the present invention is the same as that of the base station 1-1, 1-2, 1-3 according to the first embodiment shown in FIG. 2.

The transmit cell determination criterion information extracting module 811 extracts information about a criterion for determining a transmit cell based on the reception quality of a common pilot signal measured in mobile stations 2-1, 2-2, 2-3 and notifies it to the reception quality threshold setting module 812. The criterion for determining a transmit cell is that a transmit cell should differ in reception quality from the cell that provides the highest reception quality of the common pilot signal by less than a predetermined inner threshold Tinner.

The larger the inner threshold Tinner notified by the transmit cell determination criterion information extracting module 811, the smaller the quality threshold Qth is set by the reception quality threshold setting module 812. The determined quality threshold Qth is multiplexed and notified with an output signal to be transmitted to the base station 1-1, 1-2, 1-3.

FIG. 16 is a flowchart of a process performed by the communication controller 81 shown in FIG. 15. The process performed by the communication controller 81 according to the sixth embodiment of the present invention will be described with reference to FIGS. 1,2, 15, and 16.

If a new inner threshold for determining a transmit cell is set (step S71 in FIG. 16), the transmit cell determination criterion information extracting module 811 of the communication controller 81 extract information about the inner threshold (step S72 in FIG. 16) and notifies the information to the reception quality threshold setting module 812.

If the inner threshold notified by the transmission cell determination criterion information extracting module 811 is less than a predetermined threshold Tth (step S73 in FIG. 16), the reception quality threshold Qth setting module 812 sets the quality threshold Qth to Qhigh (step S74 in FIG. 16). On the other hand, if the inner threshold notified by the transmit cell determination criterion information extracting module 811 is greater than the predetermined threshold Tth (step S73 in FIG. 16), the reception quality threshold setting module 812 sets the quality threshold Qth to Qlow (step S75 in FIG. 16). Here Qlow < Qhigh.

The quality threshold Qth set by the reception quality threshold setting module 812 is multiplexed and notified with a signal to be outputted to the base station 1-1, 1-2, 1-3 (step S76 in FIG. 16).

Effects of the present embodiment will be described below. According to the present embodiment, the quality threshold Qth is set to a high value if the inner threshold, which is the criterion for determining a transmit cell by a mobile station 2-1, 2-2, 2-3, is low and the probability of resulting in a smaller number of transmit cell is higher. If the inner threshold is high and the probability of resulting in a larger number of transmit cells is high, the quality threshold Qth is set to a low value.

If the number of transmit cells is small, the probability of degradation of the downlink is high because if a reception error occurs in a transmit cell and the transmit cell stops transmission, there would be no or few other available transmit cells. According to the present embodiment, if the number of transmit cells is likely to become smaller, the quality threshold Qth can be set to a high value to decrease the probability that a transmit cell erroneously receives a CW, thereby inhibiting the above-described degradation of the downlink.

If the inner threshold is high and therefore the number of cells selected as transmit cells is large, the probability that enough other transmit cells are available even if a transmit cell stops transmission due to a CW reception error. According to the present invention, in such a case, the quality threshold Qth can be set to a low value to minimize the possibility that a non-transmit base station makes transmission over the downlink and reduce interference in the downlink. Thus, according to the present invention, degradation of and interference in the downlink can be minimized according to the number of transmit cells selected and therefore the capacity of the downlink can be increased.

While the communication controller 81 including the handover cell information extracting module 811 and reception quality threshold setting module 812 is provided in the radio network controller, the communication controller 81 may be provided in each base station 1-1, 1-2, and 1-3.

FIG. 17 is a block diagram showing a configuration of a radio network controller according to a seventh embodiment of the present invention. The configuration of the radio network controller according to the seventh embodiment of the present invention is the same as that of the radio network controller of the first embodiment shown in FIG. 3, except that a communication controller 91 including a uplink target FER information extracting module 911 and a reception quality threshold setting module 912 is provided. The same components as those of the mobile communication system of the first embodiment are labeled with the same reference numbers. Operations of the same components as those in the first embodiment are also the same. The system configuration of the seventh embodiment of the present invention is the same as the configuration of the cellular system according to the first embodiment shown in FIG. 1. The configuration of a base station according to the seventh embodiment of the present invention is the same as that of the base station 1-1, 1-2, 1-3 according to the first embodiment shown in FIG. 2.

The uplink target FER information extracting module 911 extracts information about a target FER in an uplink and notifies it to the reception quality threshold setting module 912. The quality threshold according to the present embodiment is a relative value, that is, an offset value ΔD, to a target SIR of the uplink, Tsir. The quality level Qth, which is actually compared with the reception quality of a CW is

$$Qth = Tsir - \Delta D.$$

The target SIR is controlled so as to meet the target FER of the uplink.

The higher the uplink target FER notified by the uplink target FER information extractingmodule 911, the lower the offset value ΔD is set by the reception quality threshold setting module 912. The set offset value ΔD is multiplexed and notified with an output signal to be transmitted to each base station 1-1, 1-2, 1-3.

FIG. 18 shows a flowchart of a process performed by the communication controller 91 shown in FIG. 17. The process performed by the communication controller 91 according to the seventh embodiment will be described with reference to FIGS. 1, 2, 17, and 18.

If a new uplink target FER is set (step S81 in FIG. 18), the uplink target FER information extracting module 911 of the communication controller 91 extract information about the target FER (step S82 in FIG. 18) and notifies it to the reception quality threshold setting module 912.

If the target FER provided by the uplink target FER information extracting module 911 is lower than a predetermined threshold FERth (step S83 in FIG. 18), the reception quality threshold setting module 912 sets the offset ΔD to ΔDlarge (step S84 in FIG. 18). If the target FER provided from the uplink target FER information extracting module 911 is higher than the predetermined threshold FERth (step S83 in FIG. 18), the reception quality threshold setting module 912 sets the offset ΔD to ΔDsmall (step S85 in FIG. 18). Here, ΔDsmall < ΔDlarge.

The offset ΔD set by the reception quality threshold setting module 912 is multiplexed and notified with a signal to be outputted to the base station 1-1, 1-2, 1-3 (step S86 in FIG. 18).

Effects of the present embodiment will be described below. According to the present embodiment, if the uplink target FER is low and therefore the reception quality meets the target SIR and the CW error rate becomes low, the quality threshold, which is determined as an offset ΔD to the target SIR, is set high so that the CW reception quality is determined to be degraded only if it is significantly degraded compared with the target SIR, thereby decreasing the probability that the reception quality of a non-transmit cell becomes lower than the threshold and minimizing interference in the downlink due to transmission by the non-transmit cell.

According to the present invention, if the uplink target FER is high and therefore the reception quality meets the target SIR and the CR error rate becomes high, the quality threshold, which is determined as an offset ΔD to the target SIR, is set to a low value so that a CW is determined to be degraded if its reception quality is lower than the target SIR by a certain degree, thereby reducing CW errors in the transmit cells and inhibiting downlink degradation.

Thus, according to the present invention, a quality threshold which is set as a relative value to the uplink target SIR can be controlled according to the target SIR to minimize degradation of and interference in the downlink and therefore the capacity of the downlink can be increased.

While the communication controller 91 including the uplink target FER information extracting module 911 and reception quality threshold setting module 912 is provided in the radio network controller, the communication controller 91 may be provided in each base station 1-1, 1-2, 1-3.

FIG. 19 is a block diagram showing a configuration of a radio network controller according to an eighth embodiment of the present invention. The configuration of the radio network controller according to the eighth embodiment of the present invention shown in FIG. 19 is the same as that of the radio network controller according to the first embodiment shown in FIG. 3, except that a communication controller 101 including a CW count information extracting module 1011 and a reception quality threshold setting module 1012 is provided. The same components as those of the mobile communication system of the first embodiment are labeled with the same reference numbers. Operations of the same components as those in the first embodiment are also the same. The system configuration of the eighth embodiment of the present invention is the same as that of the cellular system according to the first embodiment shown in FIG. 1. The configuration of a base station is the same as that of the base station 1-1, 1-2, 1-3 according to the first embodiment shown in FIG. 2.

The CW count information extracting module 1011 extracts information about the number of candidate CWs that can be transmitted by an mobile station 2-1, 2-2, 2-3 over an uplink and notifies it to the reception quality threshold setting module 1012. The reception quality threshold setting module 1012 set the quality threshold Qth according to the number of candidate CWs that can be transmitted over the uplink that is notified by the CW count information extracting module 1011. The less the candidate CWs, the lower threshold Qth is set by the reception quality threshold setting module 1012. The set quality threshold Qth is multiplexed and notified with an output signal to be transmitted to each base station 1-1, 1-2, and 1-3.

FIG. 20 shows a flowchart of a process performed by the communication controller 101 shown in FIG. 19. The process performed by the communication controller 101 according to the eighth embodiment of the present invention will be described with reference to FIGS. 1, 2, 19, and 20.

When a cell identifier is assigned and a new count of candidate CWs that can be transmitted over the uplink is set (step S91 in FIG. 20), the CW count information extracting module 1011 of the communication controller 101 extracts information about the candidate CW count (step S92 in FIG. 20) and notifies the information to the reception quality threshold setting module 1012.

If the candidate CW count notified by the CW count information extracting module 1011 is smaller than a predetermined threshold Nth (step S93 in FIG. 20), the reception quality threshold setting module 1012 sets the quality threshold Qth to Qlow (step S94 in FIG. 20). On the other hand, if the candidate CW count provided by the CW count information extracting module 1011 is greater than the predetermined threshold Nth (step S93 in FIG. 20), the reception quality threshold setting module 1012 sets the quality threshold Qth to Qhigh (step S95 in FIG. 20). Here Qlow < Qhigh.

The quality threshold Qth set by the reception quality threshold setting module 1012 is multiplexed and notified with a signal to be outputted to the base station 1-1, 1-2, 1-3 (step S96 in FIG. 20).

Effects of the present embodiment will be described below. According to the present embodiment, if the number of candidate CWs that can be transmitted by a mobile station 2-1, 2-2, 2-3 is small and therefore the CW reception quality in the base station 1-1, 1-2, 1-3 is low and the probability of occurrence of a CW determination error due to a bit error is low, the quality threshold Qth is set to a low value to reduce interference which would be caused by transmission over the downlink made by a non-transmit base station in which the CW quality becomes lower than the quality threshold Qth.

According to the present embodiment, the number of candidate CWs that can be transmitted by a mobile station 2-1, 2-2, 2-3 over the uplink is large and therefore the CW reception quality is high and the probability of occurrence of CW determination errors is high, the quality threshold Qth is set high to reduce CW errors in the transmit cell and inhibit degradation of the downlink. Thus, according to the present embodiment, downlink degradation and interference can be minimized according to the number of candidate CWs that can be transmitted over the uplink and therefore the capacity of the downlink can be increased.

While the communication controller 101 including the CW count information extracting module 1011 and reception quality threshold setting module 1012 is provided in the radio network controller in the present embodiment, the communication controller 101 may be provided in each base station 1-1, 1-2, 1-3.

While only one threshold value is used as a criterion to control the quality threshold Qth in two steps in the first to eighth embodiments of the present as described above, more than one threshold values may be used to control the quality threshold Qth in more than three steps.

While each of the base stations 1-1, 1-2, and 1-3 in the first to eighth embodiments of the present invention makes transmission to three cells, the number of cells to which each base station 1-1, 1-2, 1-3 makes transmission may be one, or others except for the three cells. The quality threshold Qth may be controlled by any combination of the first to eighth embodiments of the present invention.

According to the present invention, the quality threshold Qth for the reception quality of a CW which specifies a transmit cell to which a mobile station make transmission over an uplink is controlled according to propagation circumstances and communication conditions, as described above.

If the quality threshold Qth were high all the time, interference from a non-transmit cell would increase. If the quality threshold Qth were low all the time, the CW error rate in a transmit cell would increase to cause degradation of the downlink.

According to the present invention, by contrast, if the error rate in a transmit cell becomes high or CW error rate becomes high compared with the reception quality of the CW, a high quality threshold Qth can be set to decrease CW reception errors in the transmit cell. Otherwise, a low quality threshold Qth can be set to minimize transmissions and therefore interference by non-transmit cells. Thus, the capacity of the downlink can be increased according to the present invention.

The present invention has the advantage the capacity of a downlink can be increased by changing the quality threshold according to propagation circumstances between a base station and a mobile station in a mobile communication system including base stations that transmit a common pilot signal with predetermined power to one or more cells and mobile stations that establish links to the base stations in one or more cells and measure the reception quality of the common pilot signal transmitted from the base stations.

## Claims

1. A method for setting a quality threshold to which compare the quality of a transmit cell specifying signal for a mobile communication system including a base station (1-1, 1-2, 1-3) transmitting a common pilot signal by using predetermined power to one or more cells (201, .., 208) and a mobilestation (2-1, 2-2, 2-3) establishing a link to said base station in said one or more cells and measuring the reception quality of said common pilot signal transmitted from said base stations, comprising the step of:

   changing the quality threshold according to propagation circumstances between said base station and said mobile station.

2. The quality threshold setting method according to claim 1, used with a transmit power control method in which said mobile station (2-1, 2-2, 2-3) selects one or more transmit cells from among cells (201, ..., 208) to which the mobile station has established a link based on the result of the measurement of the reception quality of said common pilot signal and transmits a transmit cell specifying signal for specifying said transmit cell over an uplink; and
   said base station (1-1, 1-2, 1-3) to which the link is established measures the reception quality of said transmit cell specifying signal which said base station has received and makes transmission over a downlink if said reception quality is higher than said predetermined quality threshold and a cell to which said base station makes transmission is specified by said transmit cell specifying signals as said transmit cell, or stops at least part of transmission over said downlink if said reception quality is higher than said predetermined quality threshold and the cell to which said base station makes transmission is not specified as said transmit cell by said transmit cell specifying signal, or makes transmission over said downlink if said reception quality is lower than said predetermined quality threshold.

3. The quality threshold setting method according to claim 2, wherein said quality threshold in said base station (1-1, 1-2, 1-3) to which the link is established is changed according to the travel velocity of said mobile station.

4. The quality threshold setting method according to claim 2, wherein said quality threshold in said base station (1-1, 1-2, 1-3) to which the link is established is changed according to the length of said transmit cell specifying signal transmitted over the uplink.

5. The quality threshold setting method according to claim 2, wherein error-correction coding is applied to said transmit cell specifying signal and said quality threshold in said base station (1-1, 1-2, 1-3) to which the link is established is changed according to the redundancy of error correction in said transmit cell specifying signal.

6. The quality threshold setting method according to claim 2, wherein the number of transmit bits of said transmit cell specifying signal per unit time is fixed and said quality threshold in said base station (1-1, 1-2, 1-3) to which the link is established is changed according to the length of a period during which said transmit cell specifying signal is transmitted.

7. The quality threshold setting method according to claim 2, wherein the period during which said transmit cell specifying signal is transmitted is fixed and said quality threshold in said base station (1-1, 1-2, 1-3) to which the link is established is changed according to the number of transmit bits of said transmit cell specifying signal per unit time.

8. The quality threshold setting method according to claim 2, wherein said transmit cell specifying signal is a bit stream corresponding to a cell identifier assigned to each cell and
   said quality threshold in said base station (1-1, 1-2, 1-3) to which the link is established is changed according to the number of bits in the bit stream that is a candidate criterion for evaluating said transmit specifying signal.

9. The quality threshold setting method according to claim 2, wherein said quality threshold in said base station (1-1, 1-2, 1-3) to which the link is established is changed according to the target quality of the downlink.

10. The quality threshold setting method according to claim 2, used with a transmit power control method in which said quality threshold Qth is set according to an equation

$$Qth = SIR - \Delta D,$$

    based on a margin ΔD to a target quality SIR of the uplink,
    wherein said margin ΔD for determining said quality threshold is changed according to the target quality SIR of the uplink.

11. The quality threshold setting method according to claim 2, wherein said quality threshold in said base station (1-1, 1-2, 1-3) to which the link is established is changed according to the number of handover cells to which said base station is making transmission.

**12.** The quality threshold setting method according to claim 2, used with a transmit power control method in which a cell that provides the highest reception quality of said common pilot signal and a cell that provides reception quality differing from said cell in reception quality by less than a predetermined transmit cell selection threshold are selected as transmit cells,
wherein said quality threshold in said base station (1-1, 1-2, 1-3) to which the link is established is changed according to said transmit cell selecting threshold.

**13.** The quality threshold setting method according to claim 2, used with a transmit power control method in which a predetermined number of transmit cells are selected in decreasing order of the reception quality of said common pilot signal,
wherein said quality threshold in said base station (1-1, 1-2, 1-3) to which the link is established is changed according to said number of transmit cells.

**14.** The quality threshold setting method according to claim 10, wherein a communication controller for setting at least one of said quality threshold and said margin $\Delta D$ for determining said quality threshold is provided in a radio network controller with which said base station to which the link is established is connected.

**15.** The quality threshold setting method according to claim 10, wherein a communication controller (31) for setting at least one of said quality threshold and said margin $\Delta D$ for determining said quality threshold is provided and associated with each of said base stations (1-1, 1-2, 1-3).

**16.** A communication controller (31) for use in a mobile communication system including a base station (1-1, 1-2, 1-3) transmitting a common pilot signal by using predetermined power to one or more cells (201, ..., 208) and a mobile station (2-1, 2-2, 2-3) establishing a link to said base station in said one or more cells and measuring the reception quality of said common pilot signal transmitted from said base stations, said communication controller controlling said base station, said communication controller comprising:

means for changing the quality threshold to which compare the quality of a transmit cell specifying signal according to propagation circumstances between said base station and said mobile station.

**17.** The communication controller according to claim 16, used with a transmit power control method in which said mobile station (2-1, 2-2, 1-3) selects one or more transmit cells from among cells to which the mobile station has established links based on the result of the measurement of the reception quality of said common pilot signal and transmits a transmit cell specifying signal for specifying said transmit cell over an uplink; and
said base station (1-1, 1-2, 1-3) to which the link is established measures the reception quality of said transmit cell specifying signal which said base station has received and makes transmission over a downlink if said reception quality is higher than said predetermined quality threshold and a cell to which said base station makes transmission is specified by said transmit cell specifying signals as said transmit cell, or stops at least part of transmission over said downlink if said reception quality is higher than said predetermined quality threshold and the cell to which said base station makes transmission is not specified as said transmit cell by said transmit cell specifying signal, or makes transmission over said downlink if said reception quality is lower than said predetermined quality threshold.

**18.** The communication controller according to claim 17, wherein said quality threshold in said base station (1-1, 1-2, 1-3) to which the link is established is controlled according to the travel velocity of said mobile station.

**19.** The communication controller according to claim 17, wherein said quality threshold in said base station (1-1, 1-2, 1-3) to which the link is established is controlled according to the length of said transmit cell specifying signal transmitted over the uplink.

**20.** The communication controller according to claim 17, wherein error-correction coding is applied to said transmit cell specifying signal and said quality threshold in said base station (1-1, 1-2, 1-3) to which the link is established is controlled according to the redundancy of error correction in said transmit cell specifying signal.

**21.** The communication controller according to claim 17, wherein the number of transmit bits of said transmit cell specifying signal per unit time is fixed and said quality threshold in said base station (1-1, 1-2, 1-3) to which the link is established is controlled according to the length of a period during which said transmit cell specifying signal is transmitted.

**22.** The communication controller according to claim 17 , wherein the period during which said transmit cell specifying signal is transmitted is fixed and said quality threshold in said base station (1-1, 1-2, 1-3) to which the link is established is controlled according to the number of transmit bits of said transmit cell specifying signal per unit time.

**23.** The communication controller according to claim 17, wherein said transmit cell specifying signal is a bit stream corresponding to a cell identifier assigned to each cell and
said quality threshold in said base station (1-1, 1-2, 1-3) to which the link is established is controlled according to the number of bits in the bit stream that is a candidate criterion for evaluating said transmit specifying signal.

**24.** The communication controller according to claim 17, wherein said quality threshold in said base station (1-1, 1-2, 1-3) to which the link is established is controlled according to the target quality of the downlink.

**25.** The communication controller according to claim 17, wherein said quality threshold Qth is determined according to an equation

$$Qth = SIR - \Delta D,$$

based on a margin ΔID to a target quality SIR of the uplink, and
said margin ΔD for determining said quality threshold in said base station (1-1, 1-2, 1-3) to which the link is established is controlled according to the target quality SIR of the uplink.

**26.** The communication controller according to claim 17, wherein said quality threshold in said base station (1-1, 1-2, 1-3) to which the link is established is controlled according to the number of handover cells to which said base station is making transmission.

**27.** The communication controller according to claim 17, wherein a cell that provides the highest reception quality of said common pilot signal and a cell that provides reception quality differing from said cell in reception quality by less than a predetermined transmit cell selection threshold are selected as transmit cells,
wherein said quality threshold in said base station (1-1, 1-2, 1-3) to which the link is established is controlled according to said transmit cell selecting threshold.

**28.** The communication controller according to claim 17, wherein a predetermined number of transmit cells are selected in decreasing order of the reception quality of said common pilot signal,
wherein said quality threshold in said base station (1-1, 1-2, 1-3) to which the link is established is controlled according to said number of transmit cells.

**29.** The communication controller according to claim 17, wherein
the larger the number of said transmit cells, the lower said quality threshold is set.

**30.** The communication controlled according to claim 16, which is provided in a radio network controller to which said base station establishes the link.

**31.** The communication controller according to claim 16, which is associated with each of said base stations (1-1, 1-2, 1-3)

**Patentansprüche**

**1.** Ein Verfahren zum Setzen eines Qualitätsschwellwerts, mit dem die Qualität eines Signals, das eine Übertragungszelle spezifiziert, verglichen wird, für ein mobiles Kommunikationssystem, das eine Basisstation (1-1, 1-2, 1-3) einschließt, die ein gemeinsames Pilotsignal unter Verwendung einer vorbestimmten Leistung an eine oder mehrere Zellen (201, ..., 208) überträgt und eine Mobilstation (2-1, 2-2, 2-3), die einen Link zu der Basisstation in der einen oder mehreren Zellen aufbaut und zum Messen der Empfangsqualität des gemeinsamen Pilotsignals, das von den Basisstationen übertragen wird, aufweisend den Schritt:

Ändern des Qualitätsschwellwerts gemäß den Ausbreitungsumständen zwischen der Basisstation und der Mobilstation.

**2.** Das Verfahren zum Setzen des Qualitätsschwellwerts nach Anspruch 1, verwendet mit einem Übertragungsleistungssteuerverfahren, bei dem die Mobilstation (2-1, 2-2, 2-3) eine oder mehrere Übertragungszellen aus den Zellen (201, ..., 208) auswählt, mit denen die Mobilstation einen Link basierend auf dem Ergebnis der Messung der Empfangsqualität des gemeinsamen Pilotsignals aufgebaut hat, und ein Signal zum Spezifizieren einer Übertragungszelle zum Spezifizieren der Übertragungszelle über einen Uplink überträgt, und
wobei die Basisstation (1-1, 1-2, 1-3), zu der der Uplink aufgebaut wird, die Empfangsqualität des Signals zur Spezifizierung der Übertragungszelle misst, das die Basisstation empfangen hat und eine Übertragung über einen Downlink durchführt, wenn die Empfangsqualität größer ist als der vorbestimmte Qualitätsschwellwert, und eine Zelle, zu der die Basisstation eine Übertragung durchführt, als Übertragungszelle durch die Übertragungszellen-Spezifizierungssignale spezifiziert wird, oder zumindest einen Teil der Übertragung über den Downlink stoppt, wenn die Empfangsqualität größer ist als der vorbestimmte Qualitätsschwellwert ist und die Zelle, zu der die Basisstation die Übertragung durchführt, nicht als Übertragungszelle durch das Übertragungszellen-Spezifizierungssignal spezifiert wird, oder eine Übertragung über den Downlink durchführt, falls die Empfangsqualität geringer ist als der vorbestimmte Qualitätsschwellwert.

3. Das Verfahren zum Setzen eines Qualitätsschwellwerts nach Anspruch 2, wobei der Qualitätsschwellwert in der Basisstation (1-1, 1-2, 1-3), zu der der Link aufgebaut wird, gemäß der Reisegeschwindigkeit der Mobilstation geändert wird.

4. Das Verfahren zum Setzen eines Qualitätsschwellwerts nach Anspruch 2, wobei der Qualitätsschwellwert in der Basisstation (1-1, 1-2, 1-3), zu der der Link aufgebaut wird, verändert wird gemäß der Länge des Übertragungszellen-Spezifierungssignals, das über den Uplink übertragen wird.

5. Das Verfahren zum Setzen eines Qualitätsschwellwerts nach Anspruch 2, wobei eine Fehlerkorrektur-Codierung auf das Übertragungszellen-Spezifierungssignal angewendet wird und der Qualitätsschwellwert in der Basisstation (1-1, 1-2, 1-3), zu der der Link aufgebaut wird, geändert wird gemäß der Redundanz der Fehlerkorrektur in dem Übertragungszellen-Spezifizierungssignal.

6. Das Verfahren zum Setzen eines Qualitätsschwellwerts nach Anspruch 2, wobei die Anzahl von Übertragungsbits des Übertragungszellen-Spezifierungssignals pro Zeiteinheit fest ist und der Qualitätsschwellwert in der Basisstation (1-1, 1-2, 1-3), mit der der Link aufgebaut wird, geändert wird entsprechend der Länge einer Zeitdauer, während derer das Übertragungszellen-Spezifizierungssignal übertragen wird.

7. Das Verfahren zum Setzen eines Qualitätsschwellwerts nach Anspruch 2, wobei die Zeitdauer, während derer das Übertragungszellen-Spezifizierungssignal übertragen wird, fest ist und der Qualitätsschwellwert in der Basisstation (1-1, 1-2, 1-3), mit der der Link aufgebaut wird, verändert wird gemäß der Anzahl von Übertragungsbits des Übertragungszellen-Spezifizierungssignals per Zeiteinheit.

8. Das Verfahren zum Setzen eines Qualitätsschwellwerts nach Anspruch 2, wobei das Übertragungszellen-Spezifizierungssignal ein Bitstrom ist, der einem Zellenidentifizierer entspricht, der jeder Zelle zugewiesen ist, und
der Qualitätsschwellwert in der Basisstation (1-1, 1-2, 1-3), mit der der Link aufgebaut wird, geändert wird gemäß der Anzahl von Bits in dem Bitstrom, was ein Kandidatenkriterium zum Evaluieren des Übertragungs-Spezifizierungssignals ist.

9. Das Verfahren zum Setzen eines Qualitätsschwellwerts nach Anspruch 2, wobei der Qualitätsschwellwert in der Basisstation (1-1, 1-2, 1-3), mit der der Link aufgebaut wird, geändert wird gemäß der Zielqualität des Downlink.

10. Das Verfahren zum Setzen eines Qualitätsschwellwerts nach Anspruch 2, verwendet mit einem Verfahren zum Steuern einer Übertragungsleistung, wobei der Qualitätsschwellwert $\underline{O}th$ gesetzt wird gemäß einer Gleichung

$$\underline{O}th = SIR - \Delta D,$$

basierend auf einer Marge $\Delta D$ für eine Zielqualität-SIR des Uplink,
wobei die Marge $\Delta D$ zum Ermitteln des Qualitätsschwellwerts geändert wird gemäß der Zielqualität-SIR des Uplink.

11. Das Verfahren zum Setzen eines Qualitätsschwellwerts nach Anspruch 2, wobei der Qualitätsschwellwert in der Basisstation (1-1, 1-2, 1-3), mit der der Link aufgebaut wird, geändert wird gemäß der Anzahl von Handover-Zellen, zu denen die Basisstation eine Übertragung durchführt.

12. Das Verfahren zum Setzen eines Qualitätsschwellwerts nach Anspruch 2, verwendet mit einem Übertragungsleistungssteuerverfahren, bei dem eine Zelle, die die höchste Empfangsqualität des gemeinsamen Pilotsignals liefert und eine Zelle, eine Empfangsqualität liefert, die sich von der Zelle in der Empfangsqualität um weniger als einen vorbestimmten Übertragungszellenauswahlschwellwert unterscheidet, als Übertragungszellen ausgewählt werden,
wobei der Qualitätsschwellwert in der Basisstation (1-1, 1-2, 1-3), zu der der Link aufgebaut wird, verändert wird entsprechend dem Übertragungszellenauswahlschwellwert.

13. Das Verfahren zum Setzen eines Qualitätsschwellwerts nach Anspruch 2, verwendet mit einem Übertragungsleistungssteuerverfahren, bei dem eine vorbestimmte Anzahl von Übertragungszellen ausgewählt wird in abnehmender Reihenfolge der Empfangsqualität des gemeinsamen Pilotsignals,
wobei der Qualitätsschwellwert in der Basisstation (1-1, 1-2, 1-3), zu der der Link aufgebaut wird, geändert wird gemäß der Anzahl von Übertragungszellen.

**14.** Das Verfahren zum Setzen eines Qualitätsschwellwerts nach Anspruch 10, wobei ein Kommunikationscontroller zum Setzen von zumindest einem aus dem Qualitätsschwellwert und der Marge ΔD zum Ermitteln des Qualitätsschwellwerts in einem Radionetzwerkcontroller bereitgestellt wird, mit dem die Basisstation, zu der der Link aufgebaut wird, verbunden ist.

**15.** Das Verfahren zum Setzen eines Qualitätsschwellwerts nach Anspruch 10, wobei der Kommunikationscontroller (31) zum Setzen von zumindest einem aus dem Qualitätsschwellwert und der Marge ΔD zum Ermitteln des Qualitätsschwellwerts bereitgestellt wird und jeder der Basisstationen (1-1, 1-2, 1-3) zugeordnet wird.

**16.** Ein Kommunikationscontroller (31) zur Verwendung in einem mobilen Kommunikationssystem einschließend eine Basisstation (1-1, 1-2, 1-3), die ein gemeinsames Pilotsignal unter Verwendung einer vorbestimmten Leistung zu einer oder mehreren Zellen (201, ..., 208) überträgt und eine mobile Station (2-1, 2-2, 2-3), die einen Link zu der Basisstation in der einen oder mehreren Zellen aufbaut und die Empfangsqualität des gemeinsamen Pilotsignals, das von den Basisstationen übertragen wird, misst, wobei der Kommunikationscontroller die Basisstation steuert, wobei der Kommunikationscontroller aufweist:

Eine Einrichtung zum Verändern des Qualitätsschwellwerts mit dem die Qualität eines eine Übertragungszelle spezifizierenden Signals verglichen wird gemäß den Ausbreitungsumständen zwischen der Basisstation und der mobilen Station.

**17.** Der Kommunikationscontroller nach Anspruch 16, verwendet mit einem Übertragungsleistungssteuerverfahren, bei dem die mobile Station (2-1, 2-2, 2-3) eine oder mehrere Übertragungszellen aus Zellen auswählt, mit denen die Mobilstation Links basierend auf dem Ergebnis der Messung der Empfangsqualität des gemeinsamen Pilotsignals aufgebaut hat und ein Übertragungszellen-Spezifizierungssignal zur Spezifizierung der Übertragungszelle über einen Uplink überträgt; und
wobei die Basisstation (1-1, 1-2, 1-3) mit der der Link aufgebaut wird, die Empfangsqualität des Übertragungszellen-Spezifizierungssignals misst, das die Basisstation empfangen hat, und eine Übertragung über einen Downlink durchführt, wenn die Empfangsqualität größer ist als der vorbestimmte Qualitätsschwellwert, und wobei eine Zelle, zu der die Basisstation eine Übertragung durchführt, als Übertragungszelle spezifiziert wird durch das Übertragungszellen-Spezifizierungssignal, oder zumindest einen Teil der Übertragung über den Downlink stoppt, wenn die Empfangsqualität größer ist als der vorbestimmte Qualitätsschwellwert und die Zelle, mit der die Basisstation eine Übertragung durchführt, nicht als Übertragungszelle durch das Übertragungszellen-Spezifizierungssignal spezifiziert wird, oder eine Übertragung über den Downlink durchführt, wenn die Empfangsqualität geringer ist als der vorbestimmte Qualitätsschwellwert.

**18.** Der Kommunikationscontroller nach Anspruch 17, wobei der Qualitätsschwellwert in der Basisstation (1-1, 1-2, 1-3), mit der der Link aufgebaut wird, gesteuert wird entsprechend der Reisegeschwindigkeit der Mobilstation.

**19.** Der Kommunikationscontroller nach Anspruch 17, wobei der Qualitätsschwellwert in der Basisstation (1-1, 1-2, 1-3), mit der der Link aufgebaut wird, gesteuert wird gemäß der Länge des Übertragungszellen-Spezifizierungssignals, das über den Uplink übertragen wird.

**20.** Der Kommunikationscontroller nach Anspruch 17, wobei eine Fehlerkorrekturcodierung angewendet wird auf das Übertragungszellen-Spezifizierungssignal und der Qualitätsschwellwert in der Basisstation (1-1, 1-2, 1-3), mit der der Link aufgebaut wird, gesteuert wird gemäß der Redundanz der Fehlerkorrektur in dem Übertragungszellen-Spezifizierungssignal.

**21.** Der Kommunikationscontroller nach Anspruch 17, wobei die Anzahl von Übertragungsbits des Übertragungszellen-Spezifizierungssignals pro Zeiteinheit fest ist und der Qualitätsschwellwert in der Basisstation (1-1, 1-2, 1-3), mit der der Link aufgebaut wird, gesteuert wird gemäß der Länge einer Zeitdauer, während derer das Übertragungszellen-Spezifizierungssignal übertragen wird.

**22.** Der Kommunikationscontroller nach Anspruch 17, wobei die Zeitdauer, während derer das Übertragungszellen-Spezifizierungssignal übertragen wird, fest ist und der Qualitätsschwellwert in der Basisstation (1-1, 1-2, 1-3), mit der der Link aufgebaut wird, gesteuert wird gemäß der Anzahl von Übertragungsbits des Übertragungszellen-Spezifizierungssignals pro Zeiteinheit.

**23.** Der Kommunikationscontroller nach Anspruch 17, wobei das Übertragungszellen-Spezifizierungssignal ein Bitstrom ist, der einem Zellenidentifizierer, der jeder Zelle zugewiesen ist, entspricht, und
der Qualitätsschwellwert in der Basisstation (1-1, 1-2, 1-3), mit der der Link aufgebaut wird, gesteuert wird gemäß der Anzahl von Bits in dem Bitstrom, der ein Kandidatenkriterium zur Evaluierung des Übertragungszellen-Spezifizierungssignals ist.

**24.** Der Kommunikationscontroller nach Anspruch 17, wobei der Qualitätsschwellwert in der Basisstation (1-1, 1-2, 1-3), mit der der Link aufgebaut wird, gesteuert wird gemäß der Zielqualität des Downlinks.

**25.** Der Kommunikationscontroller nach Anspruch 17, wobei der Qualitätsschwellwert $\underline{Q}th$ bestimmt wird gemäß einer Gleichung

$$\underline{Q}th = SIR - \Delta D,$$

basierend auf einer Marge ΔD für eine Zielqualität-SIR des Uplinks und
die Marge ΔD zum Ermitteln des Qualitätsschwellwerts in der Basisstation (1-1, 1-2, 1-3), mit der der Link aufgebaut wird, gesteuert wird gemäß der Zielqualität-SIR des Uplinks.

**26.** Der Kommunikationscontroller nach Anspruch 17, wobei der Qualitätsschwellwert in der Basisstation (1-1, 1-2, 1-3), mit der der Link aufgebaut wird, gesteuert wird gemäß der Anzahl von Handover-Zellen, zu der die Basisstation eine Übertragung durchführt.

**27.** Der Kommunikationscontroller nach Anspruch 17, wobei eine Zelle, die die höchste Empfangsqualität des gemeinsamen Pilotsignals liefert und eine Zelle, die eine Empfangsqualität liefert, die sich von der Zelle in der Empfangsqualität um weniger als einen vorbestimmten Übertragungszellenauswahlschwellwert unterscheidet, als Übertragungszellen ausgewählt werden,
wobei der Qualitätsschwellwert in der Basisstation (1-1, 1-2, 1-3), mit der der Link aufgebaut wird, gesteuert wird gemäß dem Übertragungszellenauswahlschwellwert.

**28.** Der Kommunikationscontroller nach Anspruch 17, wobei eine vorbestimmte Anzahl von Übertragungszellen ausgewählt wird, in absteigender Reihenfolge der Empfangsqualität des gemeinsamen Pilotsignals,
wobei der Qualitätsschwellwert in der Basisstation (1-1, 1-2, 1-3), mit der der Link aufgebaut wird, gesteuert wird gemäß der Anzahl von Übertragungszellen.

**29.** Der Kommunikationscontroller nach Anspruch 17, wobei je größer die Anzahl der Übertragungszellen, desto niedriger der Qualitätsschwellwert gesetzt wird.

**30.** Der Kommunikationscontroller nach Anspruch 16, welcher in einem Radionetzwerkcontroller bereitgestellt wird, mit dem die Basisstation die Verbindung aufbaut.

**31.** Der Kommunikationscontroller nach Anspruch 16, der jeder der Basisstationen (1-1, 1-2, 1-3) zugeordnet ist.

## Revendications

**1.** Procédé pour définir un seuil de qualité auquel est comparée la qualité d'un signal de spécification de cellule d'émission pour un système de communication mobile comprenant une station de base (1-1, 1-2, 1-3) transmettant un signal pilote commun en utilisant une puissance prédéterminée à une ou plusieurs cellules (201, ..., 208) et une station mobile (2-1, 2-2, 2-3) établissant une liaison avec ladite station de base dans lesdites une ou plusieurs cellules et en mesurant la qualité de réception dudit signal pilote commun émis par lesdites stations de base, comprenant l'étape consistant à :

> modifier le seuil de qualité en fonction des circonstances de propagation entre ladite station de base et ladite station mobile.

**2.** Procédé de définition de seuil de qualité selon la revendication 1, utilisé avec un procédé de contrôle de puissance d'émission dans lequel ladite station mobile (2-1, 2-2, 2-3) sélectionne une ou plusieurs cellules d'émission parmi les cellules (201, ..., 208) avec lesquelles la station mobile a établi une liaison sur la base du résultat de la mesure de la qualité de réception dudit signal pilote commun et transmet un signal de spécification de cellule d'émission pour spécifier ladite cellule d'émission sur une liaison montante ; et
ladite station de base (1-1, 1-2, 1-3) avec laquelle la liaison est établie mesure la qualité de réception dudit signal de spécification de cellule d'émission que ladite station de base a reçu et effectue une transmission sur une liaison descendante si ladite qualité de réception est supérieure audit seuil de qualité prédéterminé et une cellule à laquelle ladite station de base effectue une transmission est spécifiée par lesdits signaux de spécification de cellule d'émission en tant que ladite cellule d'émission, ou arrête au moins une partie de la transmission sur ladite liaison descendante si ladite qualité de réception est supérieure audit seuil de qualité prédéterminé et la cellule vers laquelle ladite station de base effectue une transmission n'est pas spécifiée en tant que ladite cellule d'émission par ledit signal de spécification de cellule d'émission, ou effectue une émission sur ladite liaison descendante si ladite qualité de réception est inférieure audit seuil de qualité prédéterminé.

3. Procédé de définition de seuil de qualité selon la revendication 2, dans lequel ledit seuil de qualité dans ladite station de base (1-1, 1-2, 1-3) avec laquelle la liaison est établie est modifié en fonction de la vitesse de déplacement de ladite station mobile.

4. Procédé de définition de seuil de qualité selon la revendication 2, dans lequel ledit seuil de qualité dans ladite station de base (1-1, 1-2, 1-3) avec laquelle la liaison est établie est modifié en fonction de la durée dudit signal de spécification de cellule d'émission transmis sur la liaison montante.

5. Procédé de définition de seuil de qualité selon la revendication 2, dans lequel un code de correction d'erreur est appliqué audit signal de spécification de cellule d'émission et ledit seuil de qualité dans ladite station de base (1-1, 1-2, 1-3) avec laquelle la liaison est établie est modifié en fonction de la redondance de correction d'erreur dans ledit signal de spécification de cellule d'émission.

6. Procédé de définition de seuil de qualité selon la revendication 2, dans lequel le nombre de bits transmis dudit signal de spécification de cellule d'émission par unité de temps est fixé et ledit seuil de qualité dans ladite station de base (1-1, 1-2, 1-3) avec laquelle la liaison est établie, est modifié en fonction de la durée d'une période pendant laquelle ledit signal de spécification de cellule d'émission est transmis.

7. Procédé de définition de seuil de qualité selon la revendication 2, dans lequel la période pendant laquelle ledit signal de spécification de cellule d'émission est transmis, est fixée et ledit seuil de qualité dans ladite station de base (1-1, 1-2, 1-3) avec laquelle la liaison est établie est modifié en fonction du nombre de bits transmis dudit signal de spécification de cellule d'émission par unité de temps.

8. Procédé de définition de seuil de qualité selon la revendication 2, dans lequel ledit signal de spécification de cellule d'émission est un train de bits correspondant à un identifiant de cellule assigné à chaque cellule et
ledit seuil de qualité dans ladite station de base (1-1, 1-2, 1-3) avec laquelle la liaison est établie est modifié en fonction du nombre de bits dans le train de bits qui est un critère candidat pour évaluer ledit signal de spécification d'émission.

9. Procédé de définition de seuil de qualité selon la revendication 2, dans lequel ledit seuil de qualité dans ladite station de base (1-1, 1-2, 1-3) avec laquelle la liaison est établie est modifié en fonction de la qualité cible de la liaison descendante.

10. Procédé de définition de seuil de qualité selon la revendication 2, utilisé avec un procédé de contrôle de puissance d'émission dans lequel ledit seuil de qualité Qth est défini selon une équation

$$Qth = SIR - \Delta D,$$

sur la base d'une marge ΔD pour une qualité cible SIR de la liaison montante,
dans lequel ladite marge ΔD pour déterminer ledit seuil de qualité est modifiée en fonction de la qualité cible SIR de la liaison montante.

11. Procédé de définition de seuil de qualité selon la revendication 2, dans lequel ledit seuil de qualité dans ladite station de base (1-1, 1-2, 1-3) avec laquelle la liaison est établie est modifié en fonction du nombre de cellules de transfert auxquelles ladite station de base effectue une transmission.

12. Procédé de définition de seuil de qualité selon la revendication 2, utilisé avec un procédé de contrôle de puissance d'émission dans lequel une cellule qui produit la qualité de réception maximale dudit signal pilote commun et une cellule qui produit une qualité de réception différente de ladite cellule en termes de qualité de réception de moins d'un seuil prédéterminé de sélection de cellule d'émission sont sélectionnées en tant que cellules d'émission,
dans lequel ledit seuil de qualité dans ladite station de base (1-1, 1-2, 1-3) avec laquelle la liaison est établie est modifié en fonction dudit seuil de sélection de cellule d'émission.

13. Procédé de définition de seuil de qualité selon la revendication 2, utilisé avec un procédé de contrôle de puissance d'émission dans lequel une pluralité de cellules d'émission prédéterminées sont sélectionnées dans l'ordre décroissant de qualité de réception dudit signal pilote commun,
dans lequel ledit seuil de qualité dans ladite station de base (1-1, 1-2, 1-3) avec laquelle la liaison est établie est modifié en fonction dudit nombre de cellules d'émission.

14. Procédé de définition de seuil de qualité selon la revendication 10, dans lequel un contrôleur de communication pour définir au moins l'un parmi ledit seuil de qualité et ladite marge ΔD pour déterminer ledit seuil de qualité est disposé dans un contrôleur de réseau de radiocommunication auquel ladite station de base avec laquelle la liaison est établie est connecté.

15. Procédé de définition de seuil de qualité selon la revendication 10, dans lequel un contrôleur de communication (31) pour définir au moins l'un parmi ledit seuil de qualité et ladite marge $\Delta D$ pour déterminer ledit seuil de qualité est fourni et associé à chacune desdites stations de base (1-1, 1-2, 1-3).

**16.** Contrôleur de communication (31) pour utilisation dans un système de communication mobile comprenant une station de base (1-1, 1-2, 1-3) transmettant un signal pilote commun en utilisant une puissance prédéterminée une ou plusieurs cellules (201, ..., 208) et une station mobile (2-1, 2-2, 2-3) établissant une liaison avec ladite station de base dans lesdites une ou plusieurs cellules et mesurant la qualité de réception dudit signal pilote commun transmis par lesdites stations de base, ledit contrôleur de communication contrôlant ladite station de base, ledit contrôleur de communication comprenant :

des moyens pour modifier le seuil de qualité auquel est comparée la qualité d'un signal de spécification de cellule d'émission selon les circonstances de propagation entre ladite station de base et ladite station mobile.

**17.** Contrôleur de communication selon la revendication 16, utilisé avec un procédé de contrôle de puissance d'émission dans lequel ladite station mobile (2-1, 2-2, 2-3) sélectionne une ou plusieurs cellules d'émission parmi les cellules avec lesquelles la station mobile a établi des liaisons sur la base du résultat de la mesure de la qualité de réception dudit signal pilote commun et transmet un signal de spécification de cellule d'émission pour spécifier ladite cellule d'émission sur une liaison montante ; et
ladite station de base (1-1, 1-2, 1-3) avec laquelle la liaison est établie, mesure la qualité de réception dudit signal de spécification de cellule d'émission que ladite station de base a reçu et effectue une transmission sur une liaison descendante si ladite qualité de réception est supérieure audit seuil de qualité prédéterminé et une cellule vers laquelle ladite station de base effectue une transmission est spécifiée par lesdits signaux de spécification de cellule d'émission en tant que ladite cellule d'émission, ou arrête au moins une partie de la transmission sur ladite liaison descendante si ladite qualité de réception est supérieure audit seuil de qualité prédéterminé et la cellule vers laquelle ladite station de base effectue une transmission n'est pas spécifiée en tant que ladite cellule d'émission par ledit signal de spécification de cellule d'émission, ou effectue une émission sur ladite liaison descendante si ladite qualité de réception est inférieure audit seuil de qualité prédéterminé.

**18.** Contrôleur de communication selon la revendication 17, dans lequel ledit seuil de qualité dans ladite station de base (1-1, 1-2, 1-3) avec laquelle la liaison est établie est contrôlé en fonction de la vitesse de déplacement de ladite station mobile.

**19.** Contrôleur de communication selon la revendication 17, dans lequel ledit seuil de qualité dans ladite station de base (1-1, 1-2, 1-3) avec laquelle la liaison est établie, est contrôlé en fonction de la durée dudit signal de spécification de cellule d'émission transmis sur la liaison montante.

**20.** Contrôleur de communication selon la revendication 17, dans lequel un code de correction d'erreur est appliqué audit signal de spécification de cellule d'émission et ledit seuil de qualité dans ladite station de base (1-1, 1-2, 1-3) avec laquelle la liaison est établie, est contrôlé en fonction de la redondance de correction d'erreur dans ledit signal de spécification de cellule d'émission.

**21.** Contrôleur de communication selon la revendication 17, dans lequel le nombre de bits transmis dudit signal de spécification de cellule d'émission par unité de temps est fixé et ledit seuil de qualité dans ladite station de base (1-1, 1-2, 1-3) avec laquelle la liaison est établie est contrôlé en fonction de la durée d'une période pendant laquelle ledit signal de spécification de cellule d'émission est transmis.

**22.** Contrôleur de communication selon la revendication 17, dans lequel la période pendant laquelle ledit signal de spécification de cellule d'émission est transmis est fixée et ledit seuil de qualité dans ladite station de base (1-1, 1-2, 1-3) avec laquelle la liaison est établie est contrôlé en fonction du nombre de bits transmis dudit signal de spécification de cellule d'émission par unité de temps.

**23.** Contrôleur de communication selon la revendication 17, dans lequel ledit signal de spécification de cellule d'émission est un train de bits correspondant à un identifiant de cellule assigné à chaque cellule et
ledit seuil de qualité dans ladite station de base (1-1, 1-2, 1-3) avec laquelle la liaison est établie, est contrôlé en fonction du nombre de bits dans le train de bits qui est un critère candidat pour évaluer ledit signal de spécification d'émission.

**24.** Contrôleur de communication selon la revendication 17, dans lequel ledit seuil de qualité dans ladite station de base (1-1, 1-2, 1-3) avec laquelle la liaison est établie, est contrôlé en fonction de la qualité cible de la liaison descendante.

**25.** Contrôleur de communication selon la revendication 17, dans lequel ledit seuil de qualité Qth est défini selon une équation

$$Qth = SIR - \Delta D,$$

sur la base d'une marge ΔD pour une qualité cible SIR de la liaison montante, et
ladite marge ΔD pour déterminer ledit seuil de qualité dans ladite station de base (1-1, 1-2, 1-3) avec laquelle la liaison est établie, est contrôlée en fonction de la qualité cible SIR de la liaison montante.

**26.** Contrôleur de communication selon la revendication 17, dans lequel ledit seuil de qualité dans ladite station de base (1-1, 1-2, 1-3) avec laquelle la liaison est établie est contrôlé en fonction du nombre de cellules de transfert auxquelles ladite station de base effectue une transmission.

**27.** Contrôleur de communication selon la revendication 17, dans lequel une cellule qui produit la qualité de réception maximale dudit signal pilote commun et une cellule qui produit une qualité de réception différente de ladite cellule en termes de qualité de réception de moins d'un seuil de sélection de cellule d'émission prédéterminé, sont sélectionnées en tant que cellules d'émission,
dans lequel ledit seuil de qualité dans ladite station de base (1-1, 1-2, 1-3) avec laquelle la liaison est établie, est contrôlé en fonction dudit seuil de sélection de cellule d'émission.

**28.** Contrôleur de communication selon la revendication 17, dans lequel un nombre prédéterminé de cellules d'émission sont sélectionnées dans l'ordre décroissant de qualité de réception dudit signal pilote commun,
dans lequel ledit seuil de qualité dans ladite station de base (1-1, 1-2, 1-3) avec laquelle la liaison est établie, est modifié en fonction dudit nombre de cellules d'émission.

**29.** Contrôleur de communication selon la revendication 17, dans lequel plus le nombre desdites cellules d'émission est élevé, plus ledit seuil de qualité défini est faible.

**30.** Contrôleur de communication selon la revendication 16, qui est disposé dans un contrôleur de réseau de radiocommunication avec lequel ladite station de base établit la liaison.

**31.** Contrôleur de communication selon la revendication 16, qui est associé à chacune desdites stations de base (1-1, 1-2, 1-3).

FIG. 1

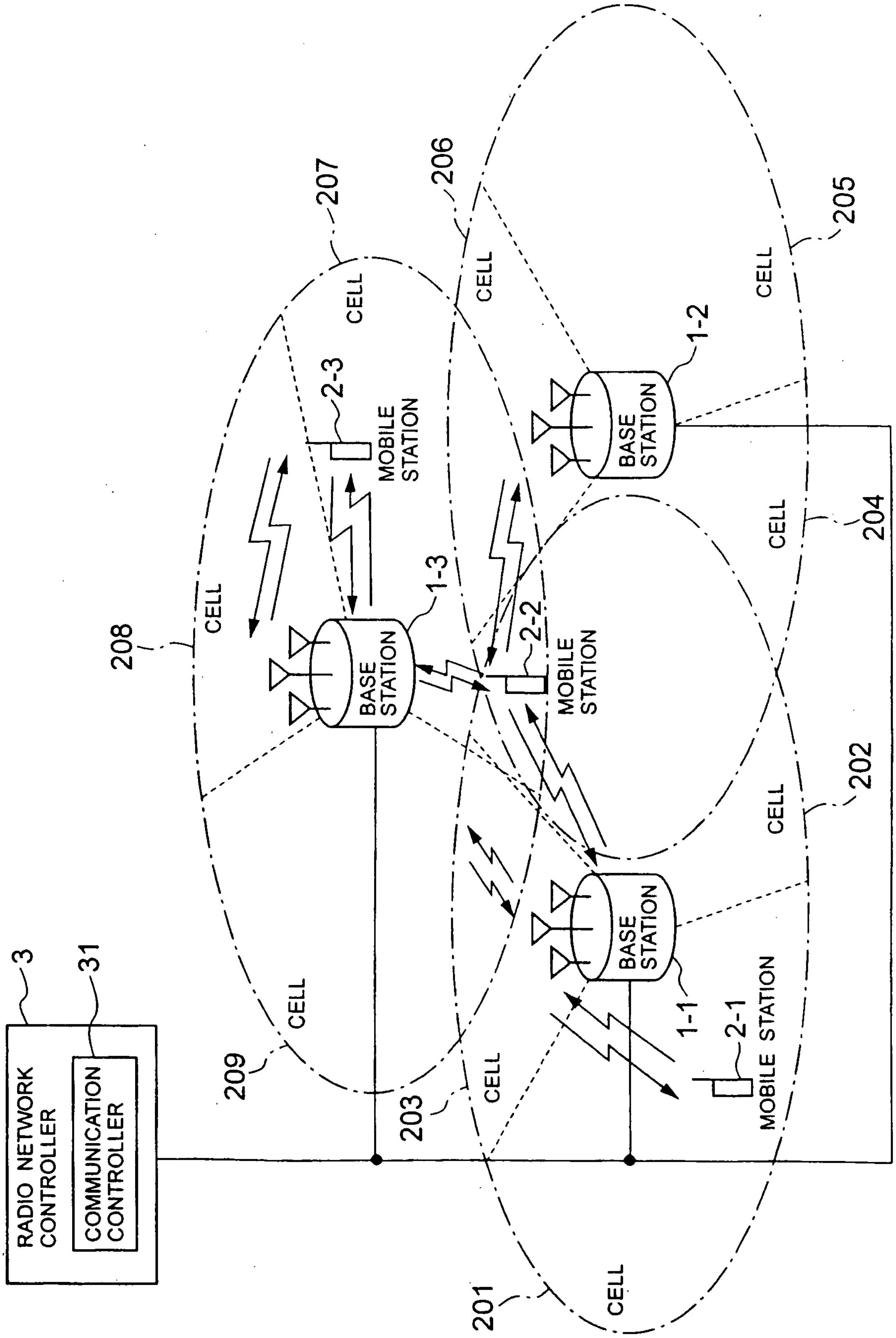
RADIO NETWORK CONTROLLER
COMMUNICATION CONTROLLER
3
31
BASE STATION
BASE STATION
BASE STATION
1-1
1-2
1-3
MOBILE STATION
MOBILE STATION
MOBILE STATION
2-1
2-2
2-3
CELL
201
202
203
204
205
206
207
208
209

FIG. 2

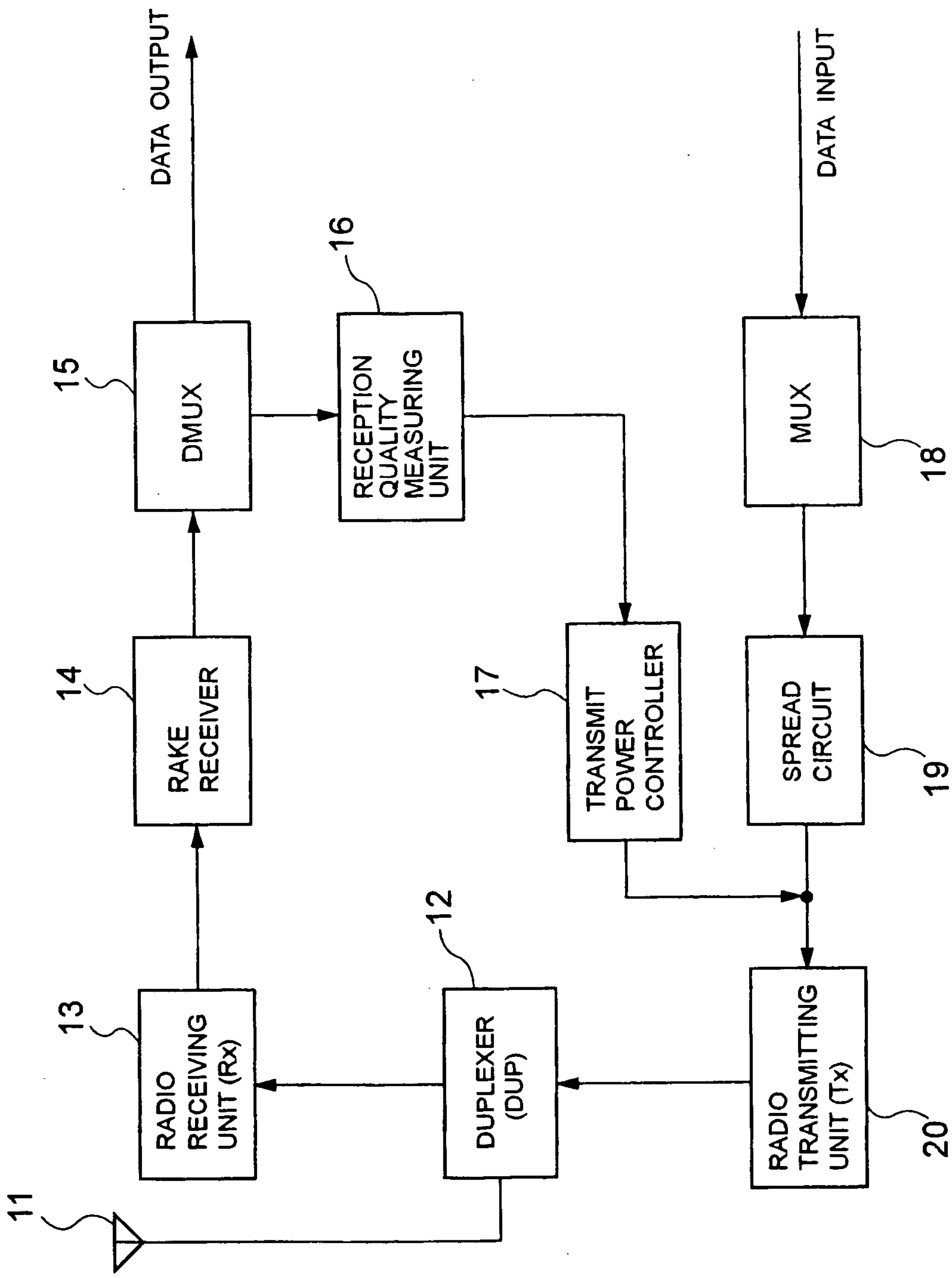
DATA OUTPUT
DATA INPUT
11
12
DUPLEXER (DUP)
13
RADIO RECEIVING UNIT (Rx)
14
RAKE RECEIVER
15
DMUX
16
RECEPTION QUALITY MEASURING UNIT
17
TRANSMIT POWER CONTROLLER
18
MUX
19
SPREAD CIRCUIT
20
RADIO TRANSMITTING UNIT (Tx)

FIG. 3

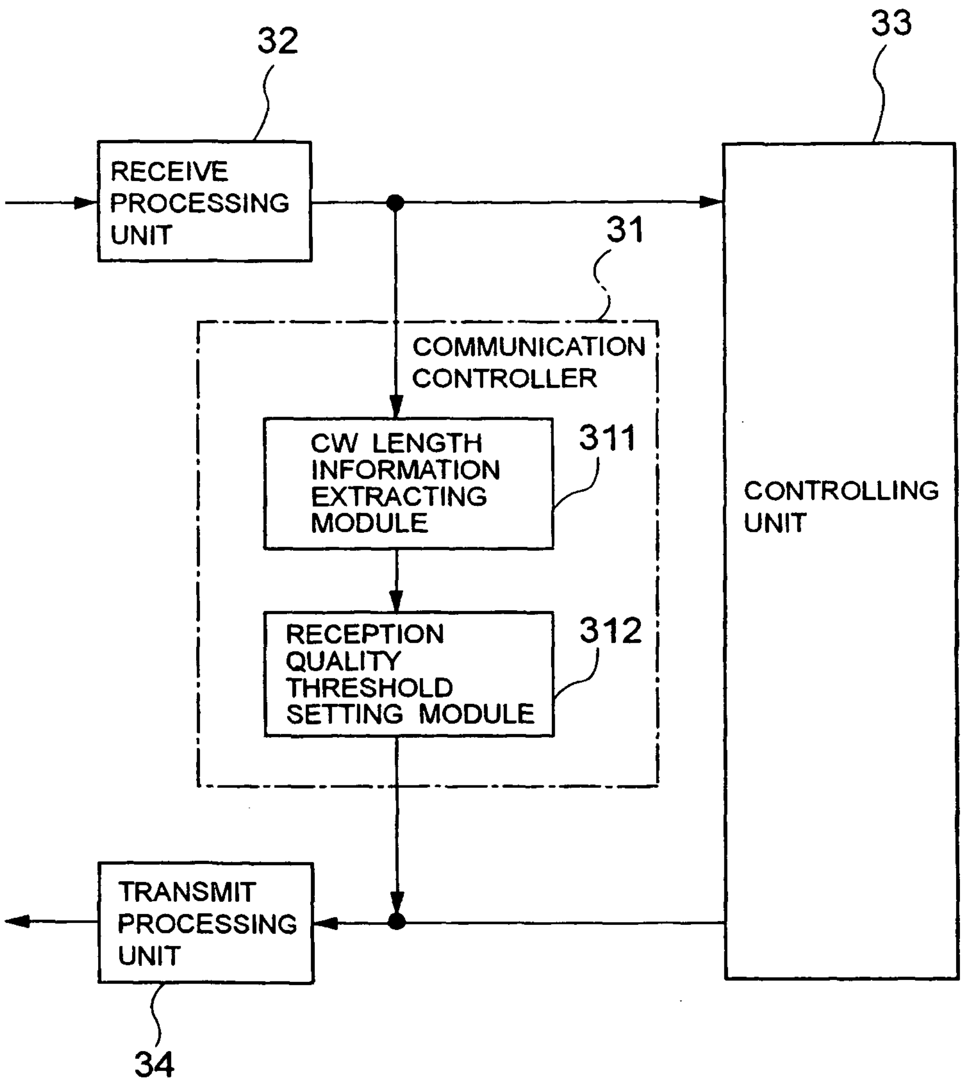
32
RECEIVE PROCESSING UNIT
33
31
COMMUNICATION CONTROLLER
CW LENGTH INFORMATION EXTRACTING MODULE
311
CONTROLLING UNIT
RECEPTION QUALITY THRESHOLD SETTING MODULE
312
TRANSMIT PROCESSING UNIT
34

FIG. 4

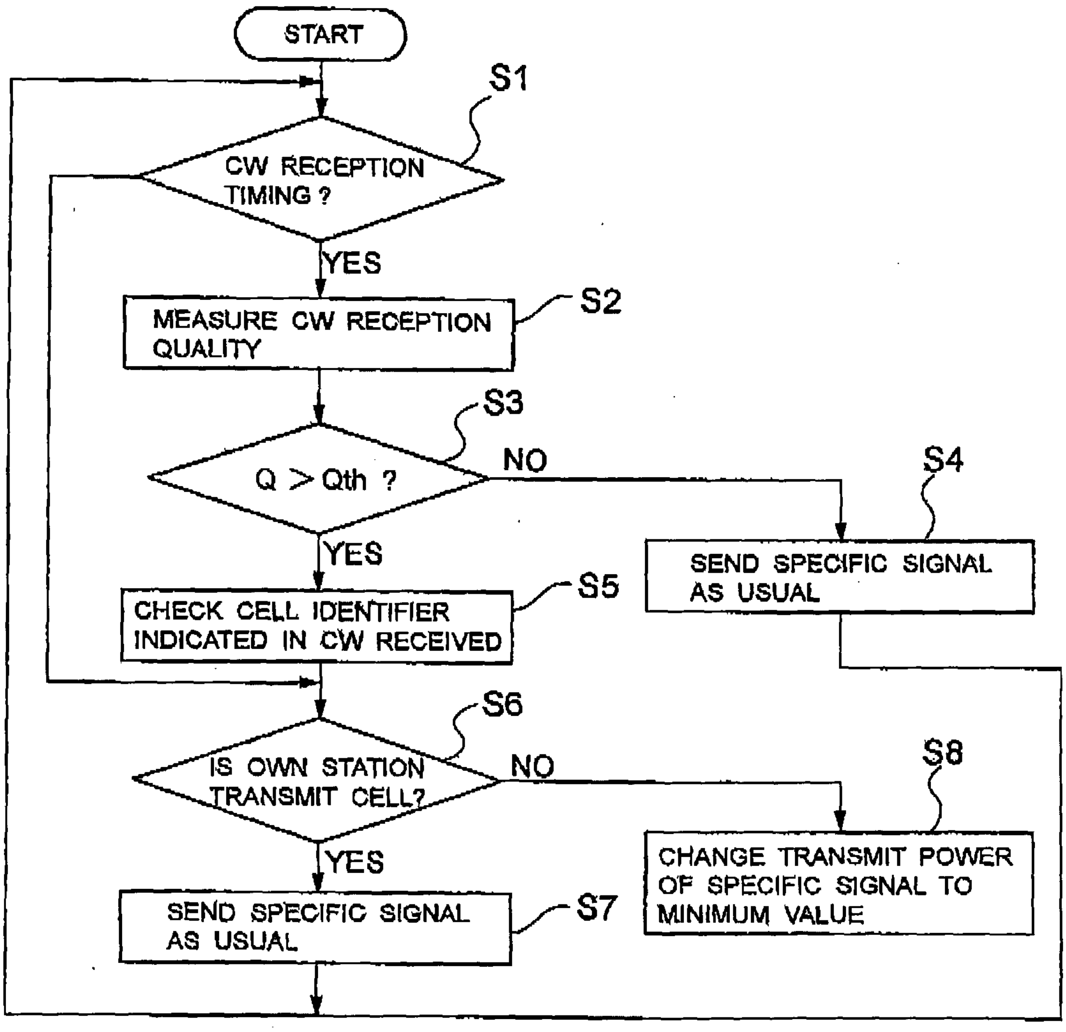
START
S1
CW RECEPTION TIMING ?
YES
MEASURE CW RECEPTION QUALITY
S2
S3
Q > Qth ?
NO
S4
YES
SEND SPECIFIC SIGNAL AS USUAL
CHECK CELL IDENTIFIER INDICATED IN CW RECEIVED
S5
S6
IS OWN STATION TRANSMIT CELL?
NO
S8
YES
CHANGE TRANSMIT POWER OF SPECIFIC SIGNAL TO MINIMUM VALUE
SEND SPECIFIC SIGNAL AS USUAL
S7

FIG. 5

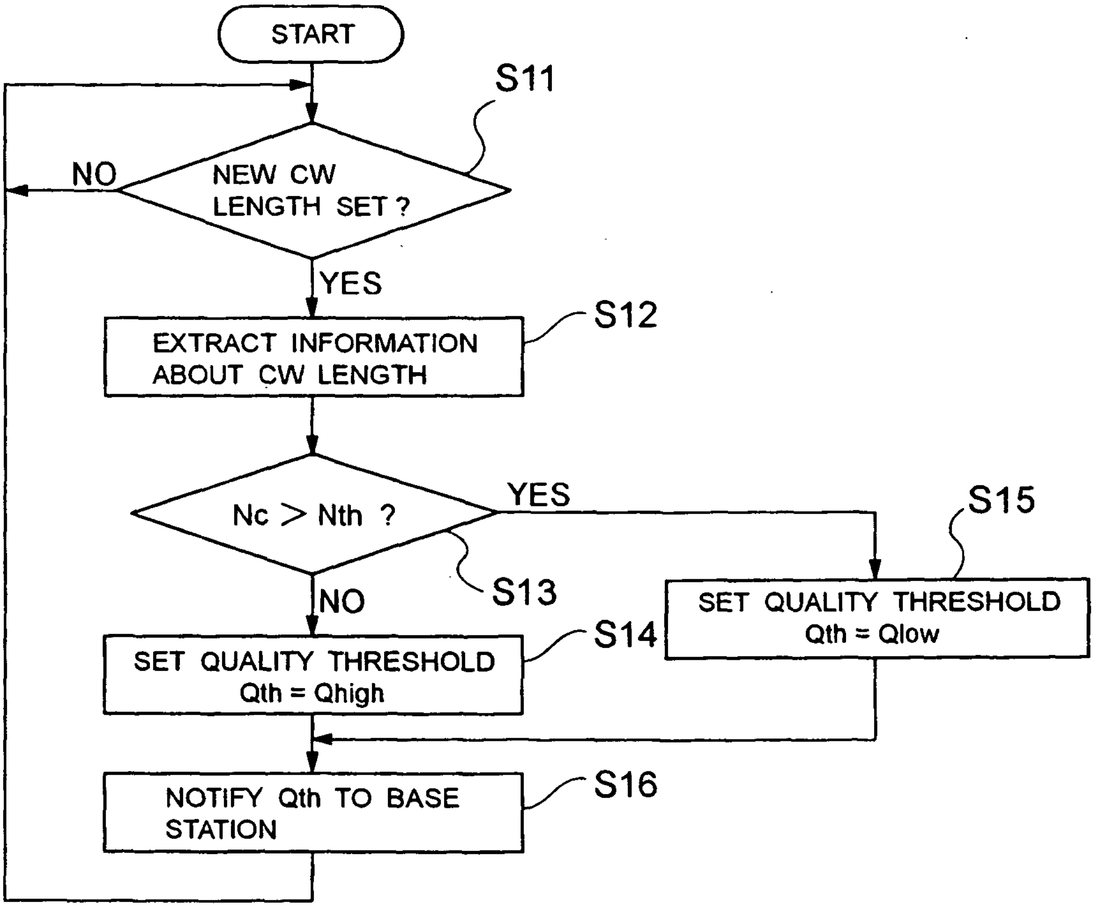
START
S11
NO
NEW CW LENGTH SET ?
YES
S12
EXTRACT INFORMATION ABOUT CW LENGTH
Nc > Nth ?
YES
S15
S13
NO
S14
SET QUALITY THRESHOLD Qth = Qlow
SET QUALITY THRESHOLD Qth = Qhigh
S16
NOTIFY Qth TO BASE STATION

FIG.6

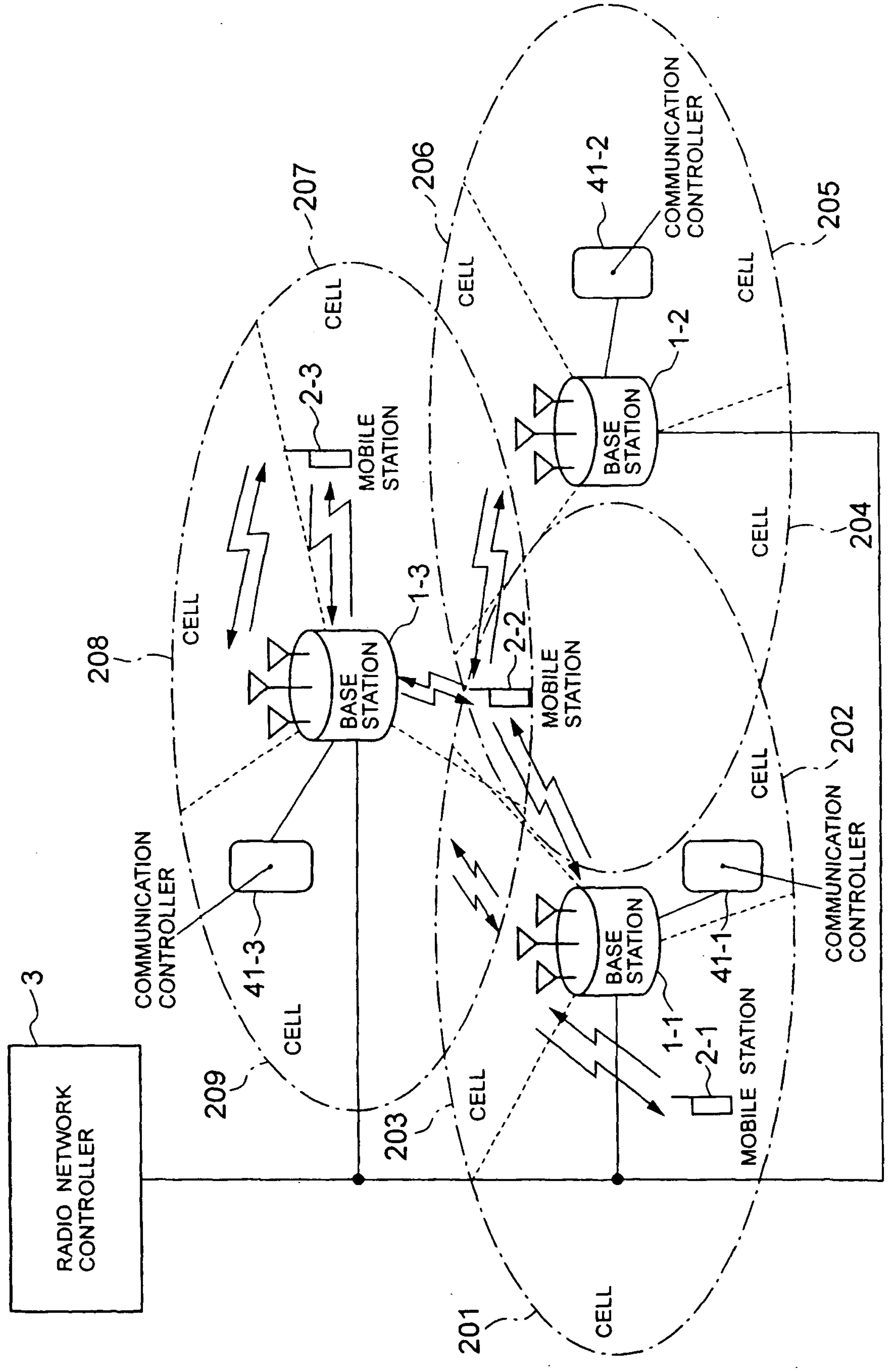
RADIO NETWORK CONTROLLER
3
COMMUNICATION CONTROLLER
41-3
CELL
209
208
CELL
BASE STATION
1-3
207
CELL
2-3
MOBILE STATION
206
CELL
41-2
COMMUNICATION CONTROLLER
1-2
BASE STATION
205
CELL
2-2
MOBILE STATION
CELL
204
CELL
202
COMMUNICATION CONTROLLER
41-1
BASE STATION
1-1
2-1
MOBILE STATION
203
CELL
201
CELL

FIG. 7

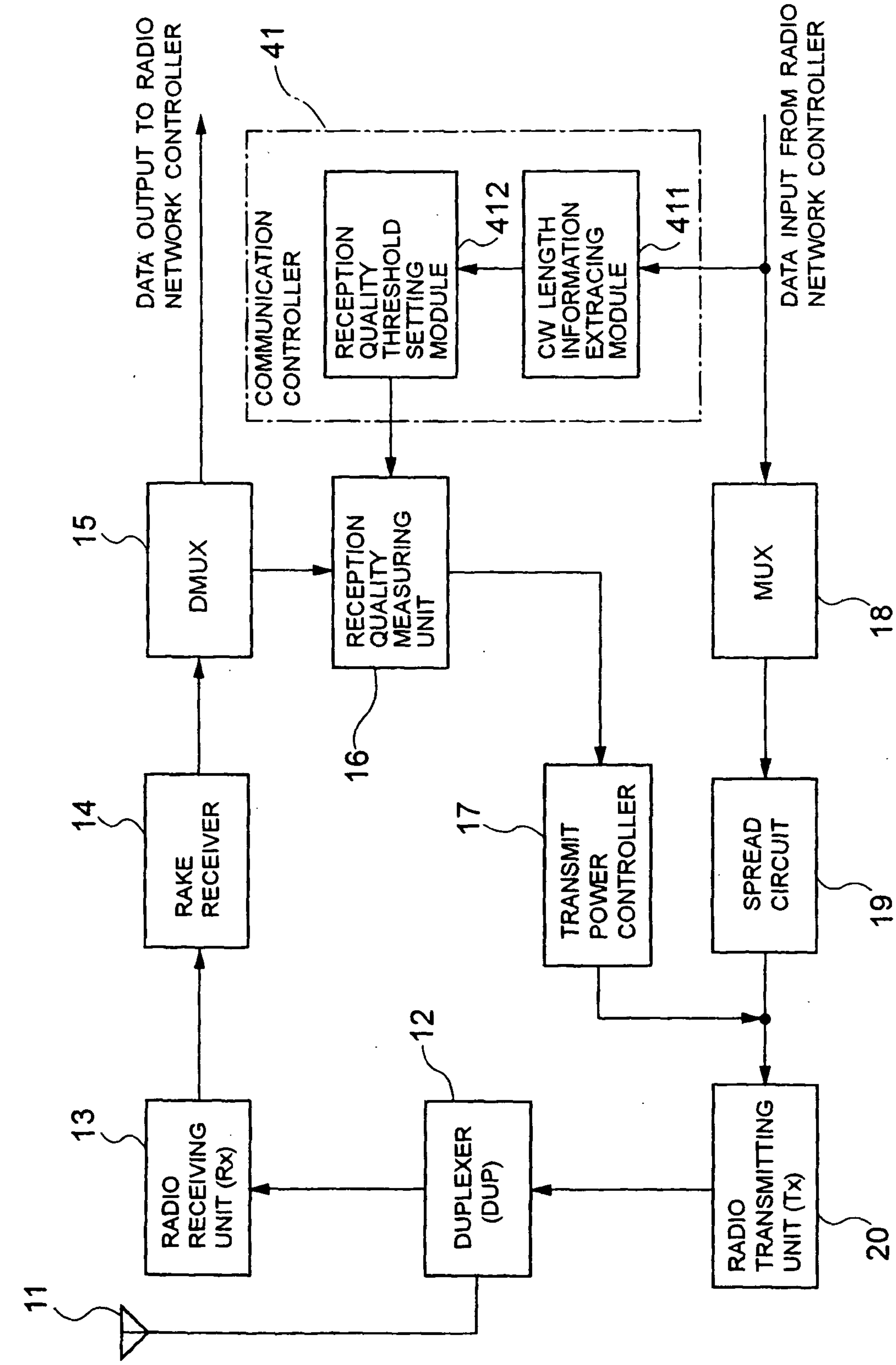
DATA OUTPUT TO RADIO NETWORK CONTROLLER
41
COMMUNICATION CONTROLLER
RECEPTION QUALITY THRESHOLD SETTING MODULE
412
CW LENGTH INFORMATION EXTRACING MODULE
411
DATA INPUT FROM RADIO NETWORK CONTROLLER
15
DMUX
RECEPTION QUALITY MEASURING UNIT
16
MUX
18
14
RAKE RECEIVER
17
TRANSMIT POWER CONTROLLER
SPREAD CIRCUIT
19
13
RADIO RECEIVING UNIT (Rx)
12
DUPLEXER (DUP)
RADIO TRANSMITTING UNIT (Tx)
20
11

FIG. 8

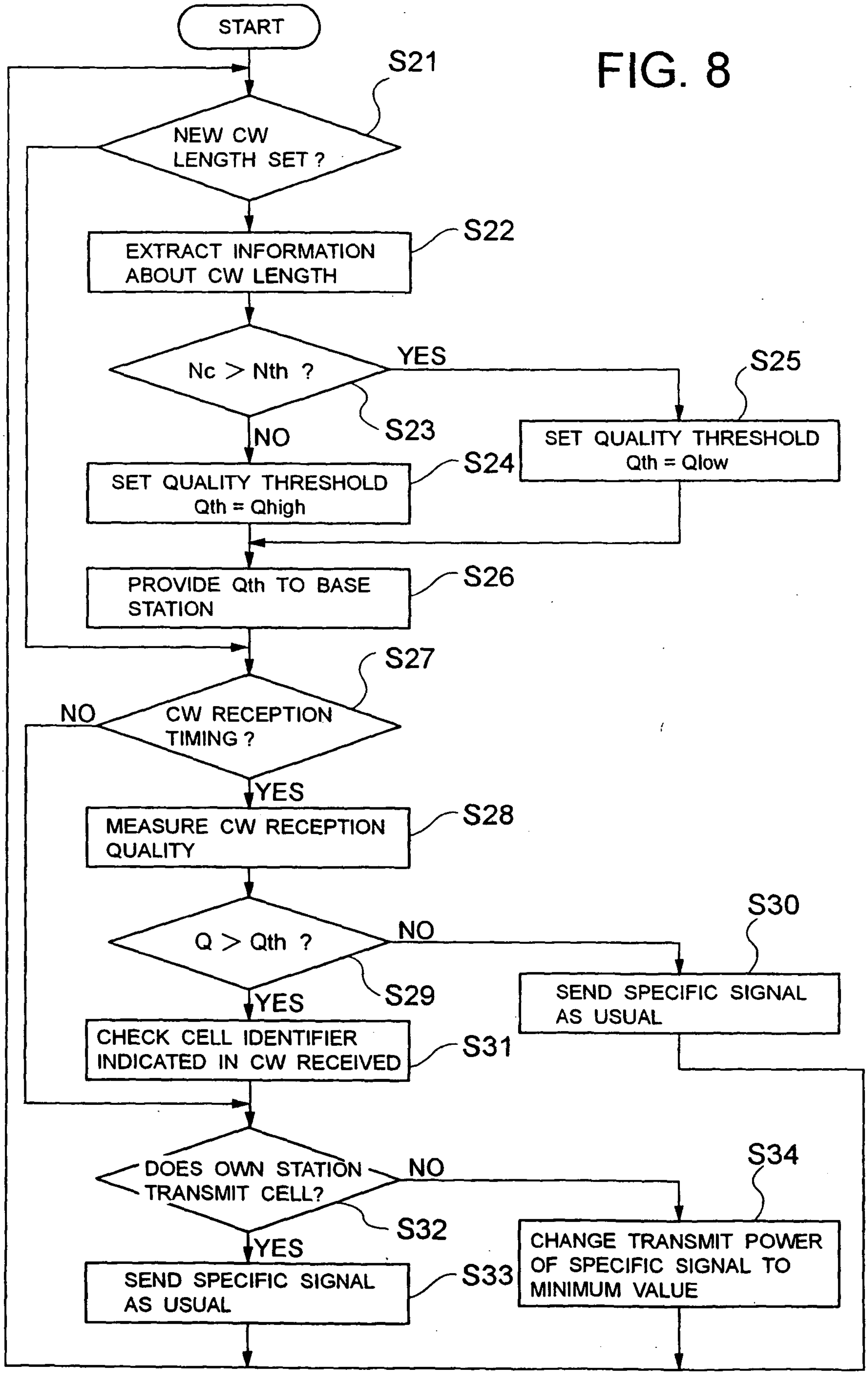
START
S21
NEW CW LENGTH SET ?
S22
EXTRACT INFORMATION ABOUT CW LENGTH
Nc > Nth ?
S23
YES
NO
S25
SET QUALITY THRESHOLD Qth = Qlow
S24
SET QUALITY THRESHOLD Qth = Qhigh
S26
PROVIDE Qth TO BASE STATION
S27
CW RECEPTION TIMING ?
NO
YES
S28
MEASURE CW RECEPTION QUALITY
Q > Qth ?
S29
NO
YES
S30
SEND SPECIFIC SIGNAL AS USUAL
S31
CHECK CELL IDENTIFIER INDICATED IN CW RECEIVED
DOES OWN STATION TRANSMIT CELL?
S32
NO
YES
S34
CHANGE TRANSMIT POWER OF SPECIFIC SIGNAL TO MINIMUM VALUE
S33
SEND SPECIFIC SIGNAL AS USUAL

FIG. 9

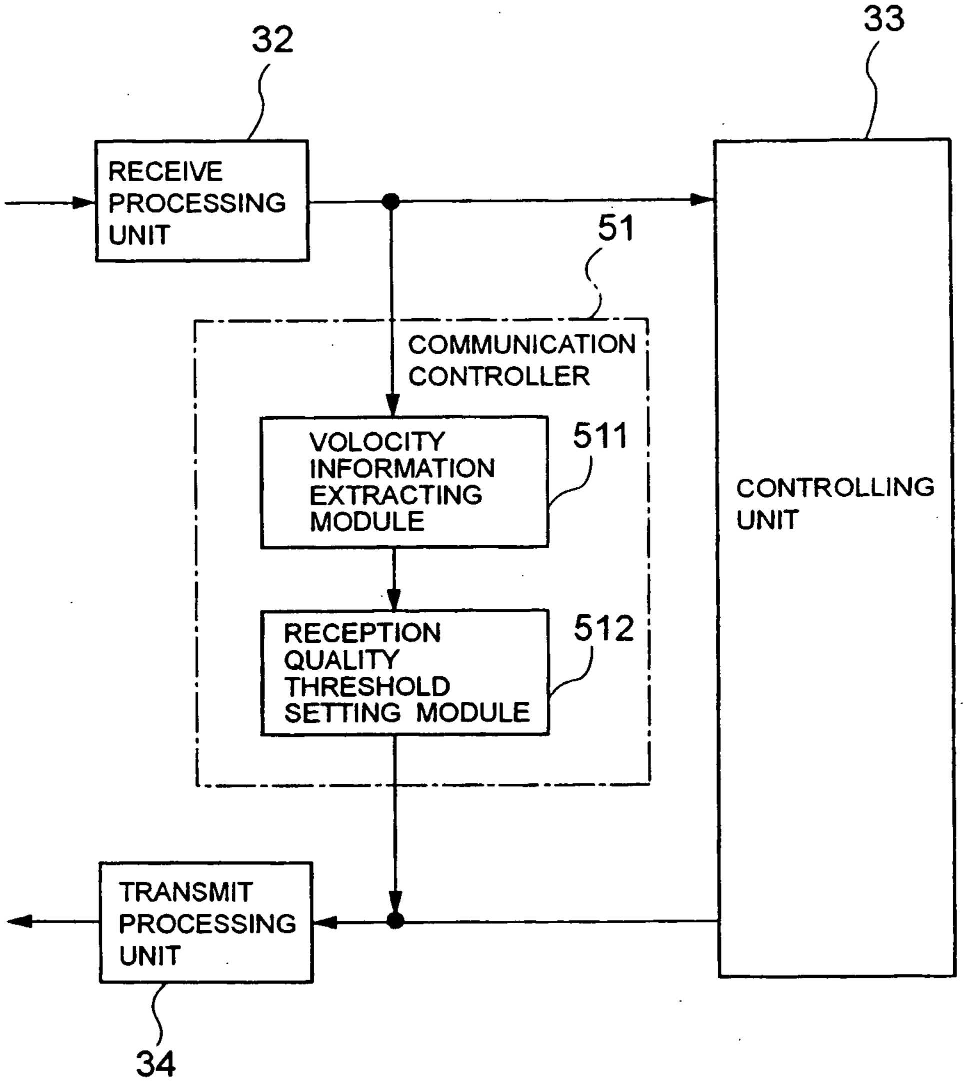
32
RECEIVE PROCESSING UNIT
33
51
COMMUNICATION CONTROLLER
VOLOCITY INFORMATION EXTRACTING MODULE
511
CONTROLLING UNIT
RECEPTION QUALITY THRESHOLD SETTING MODULE
512
TRANSMIT PROCESSING UNIT
34

FIG. 10

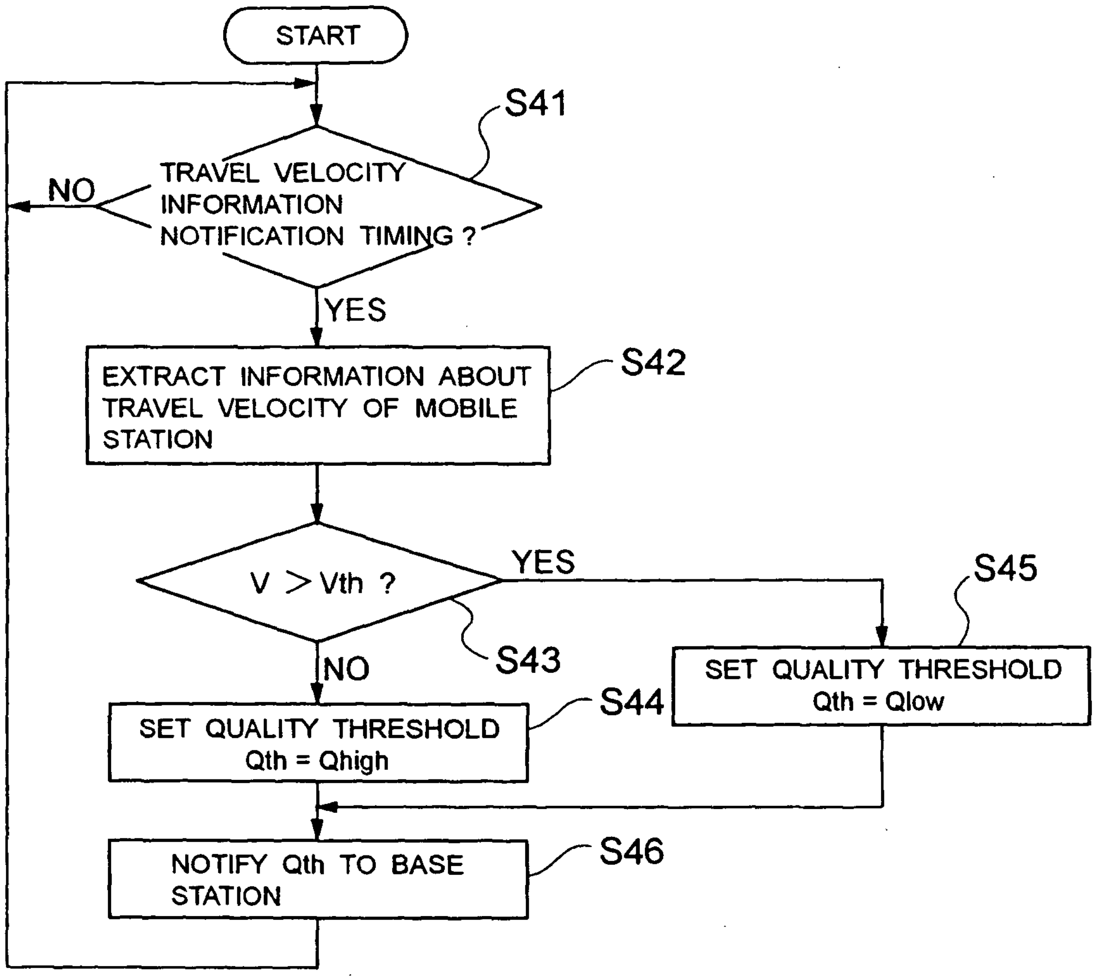
START
S41
TRAVEL VELOCITY INFORMATION NOTIFICATION TIMING ?
NO
YES
EXTRACT INFORMATION ABOUT TRAVEL VELOCITY OF MOBILE STATION
S42
V > Vth ?
S43
YES
NO
S45
SET QUALITY THRESHOLD Qth = Qlow
S44
SET QUALITY THRESHOLD Qth = Qhigh
NOTIFY Qth TO BASE STATION
S46

FIG. 11

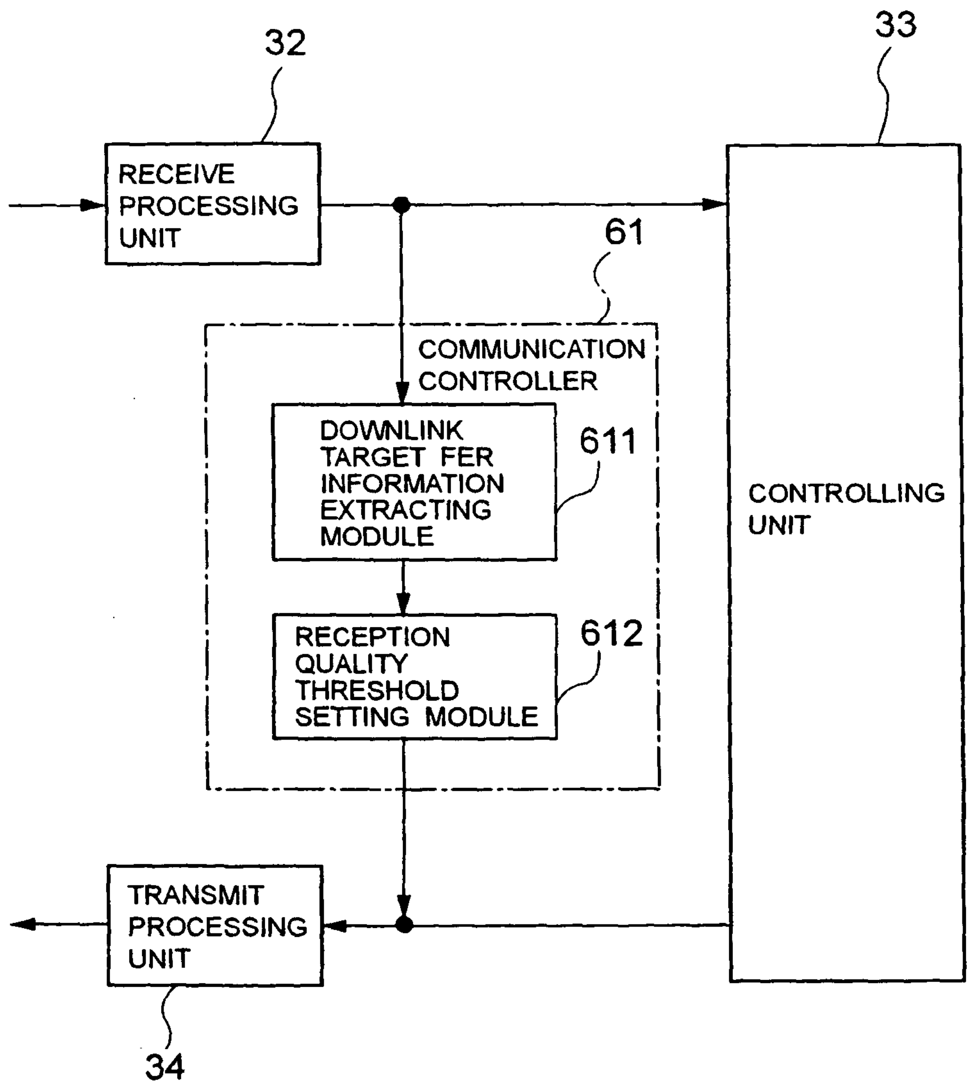
32
33
RECEIVE PROCESSING UNIT
61
COMMUNICATION CONTROLLER
DOWNLINK TARGET FER INFORMATION EXTRACTING MODULE
611
RECEPTION QUALITY THRESHOLD SETTING MODULE
612
CONTROLLING UNIT
TRANSMIT PROCESSING UNIT
34

FIG. 12

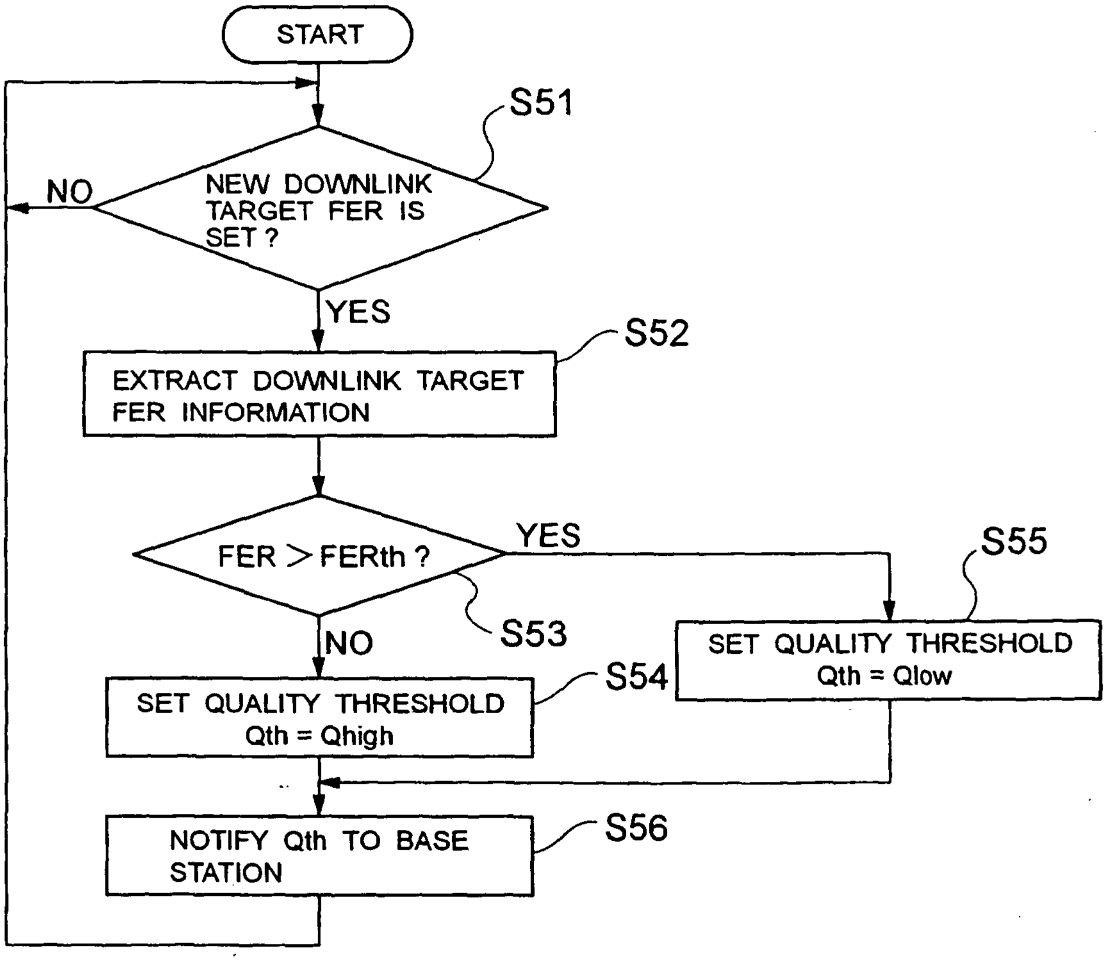
START
S51
NO
NEW DOWNLINK TARGET FER IS SET ?
YES
S52
EXTRACT DOWNLINK TARGET FER INFORMATION
FER > FERth ?
YES
S55
S53
NO
SET QUALITY THRESHOLD Qth = Qlow
S54
SET QUALITY THRESHOLD Qth = Qhigh
S56
NOTIFY Qth TO BASE STATION

FIG. 13

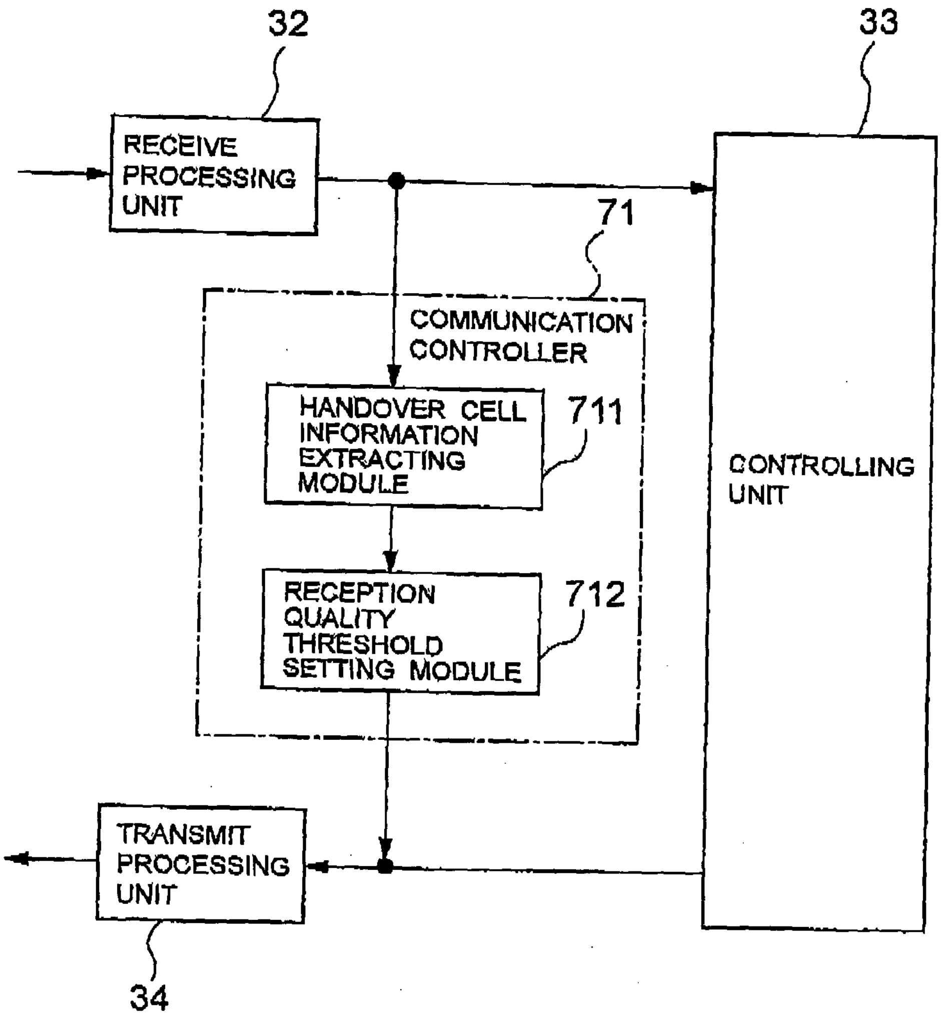
32
33
RECEIVE PROCESSING UNIT
71
COMMUNICATION CONTROLLER
HANDOVER CELL INFORMATION EXTRACTING MODULE
711
RECEPTION QUALITY THRESHOLD SETTING MODULE
712
CONTROLLING UNIT
TRANSMIT PROCESSING UNIT
34

FIG. 14

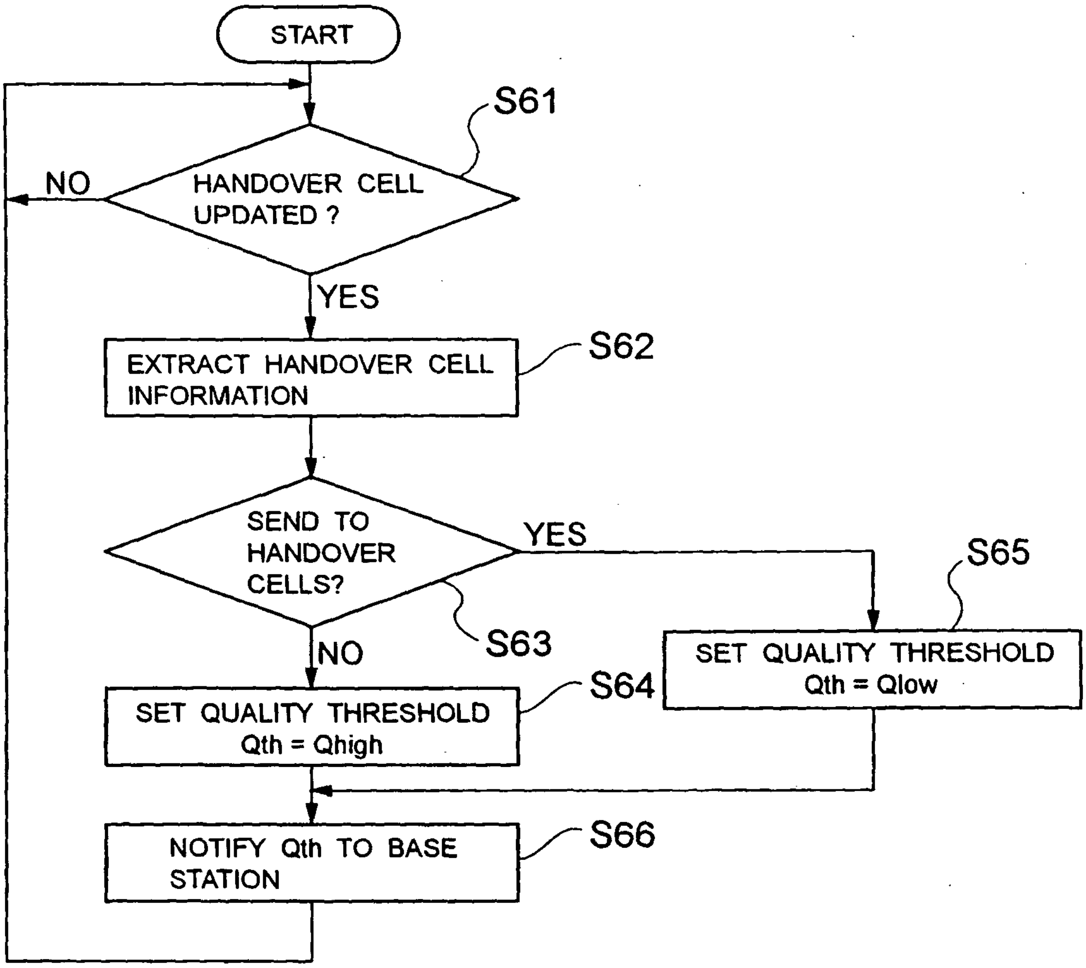
START
S61
HANDOVER CELL UPDATED ?
NO
YES
EXTRACT HANDOVER CELL INFORMATION
S62
SEND TO HANDOVER CELLS?
YES
S65
S63
NO
SET QUALITY THRESHOLD Qth = Qlow
SET QUALITY THRESHOLD Qth = Qhigh
S64
NOTIFY Qth TO BASE STATION
S66

FIG. 15

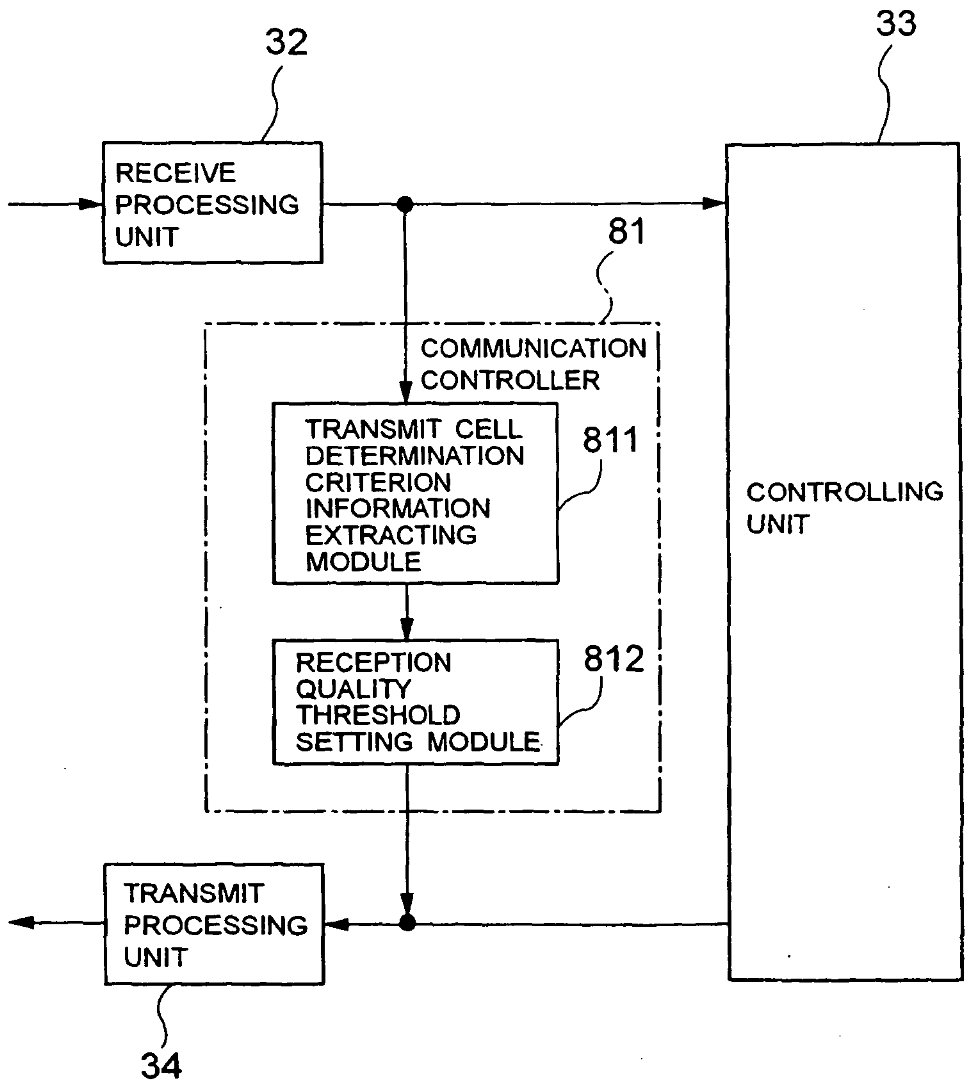
32
33
RECEIVE PROCESSING UNIT
81
COMMUNICATION CONTROLLER
TRANSMIT CELL DETERMINATION CRITERION INFORMATION EXTRACTING MODULE
811
CONTROLLING UNIT
RECEPTION QUALITY THRESHOLD SETTING MODULE
812
TRANSMIT PROCESSING UNIT
34

FIG. 16

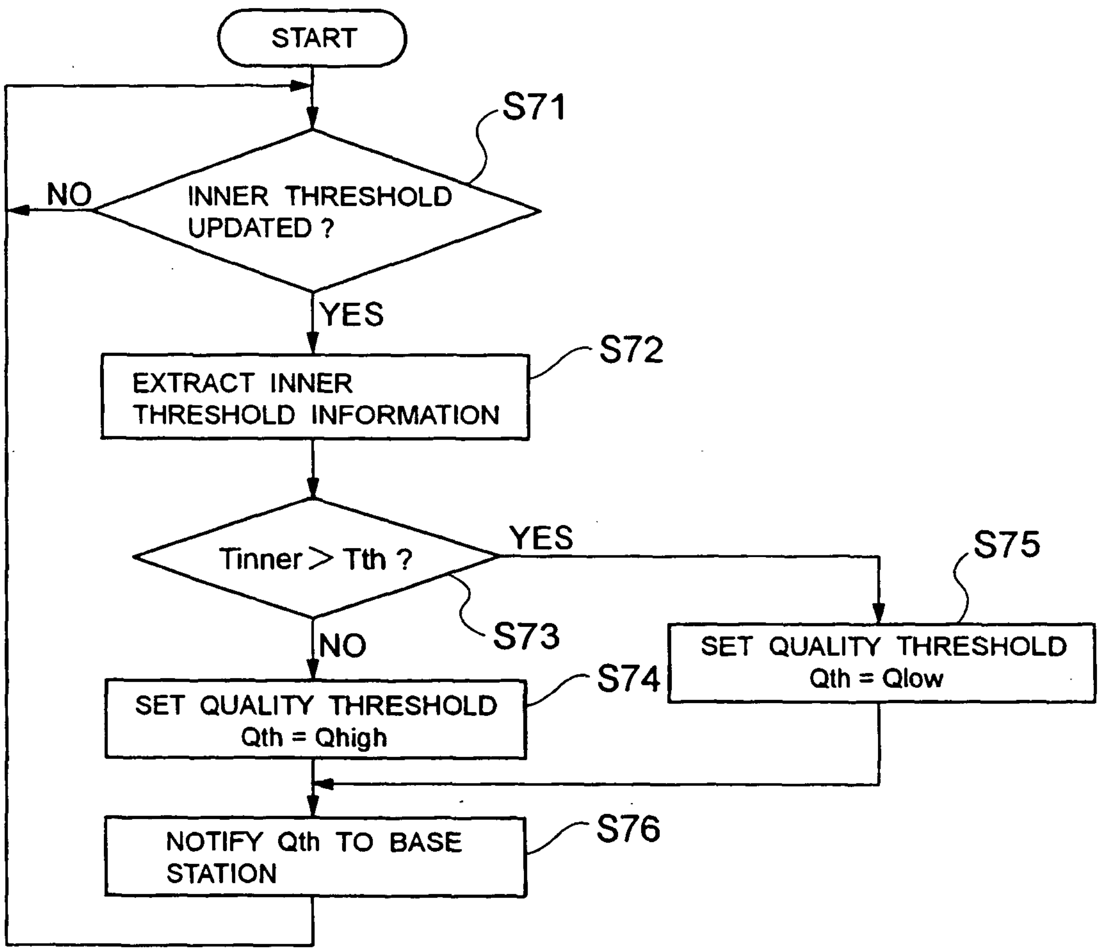
START
S71
NO
INNER THRESHOLD UPDATED ?
YES
S72
EXTRACT INNER THRESHOLD INFORMATION
Tinner > Tth ?
YES
S75
S73
NO
SET QUALITY THRESHOLD
Qth = Qlow
S74
SET QUALITY THRESHOLD
Qth = Qhigh
S76
NOTIFY Qth TO BASE STATION

FIG. 17

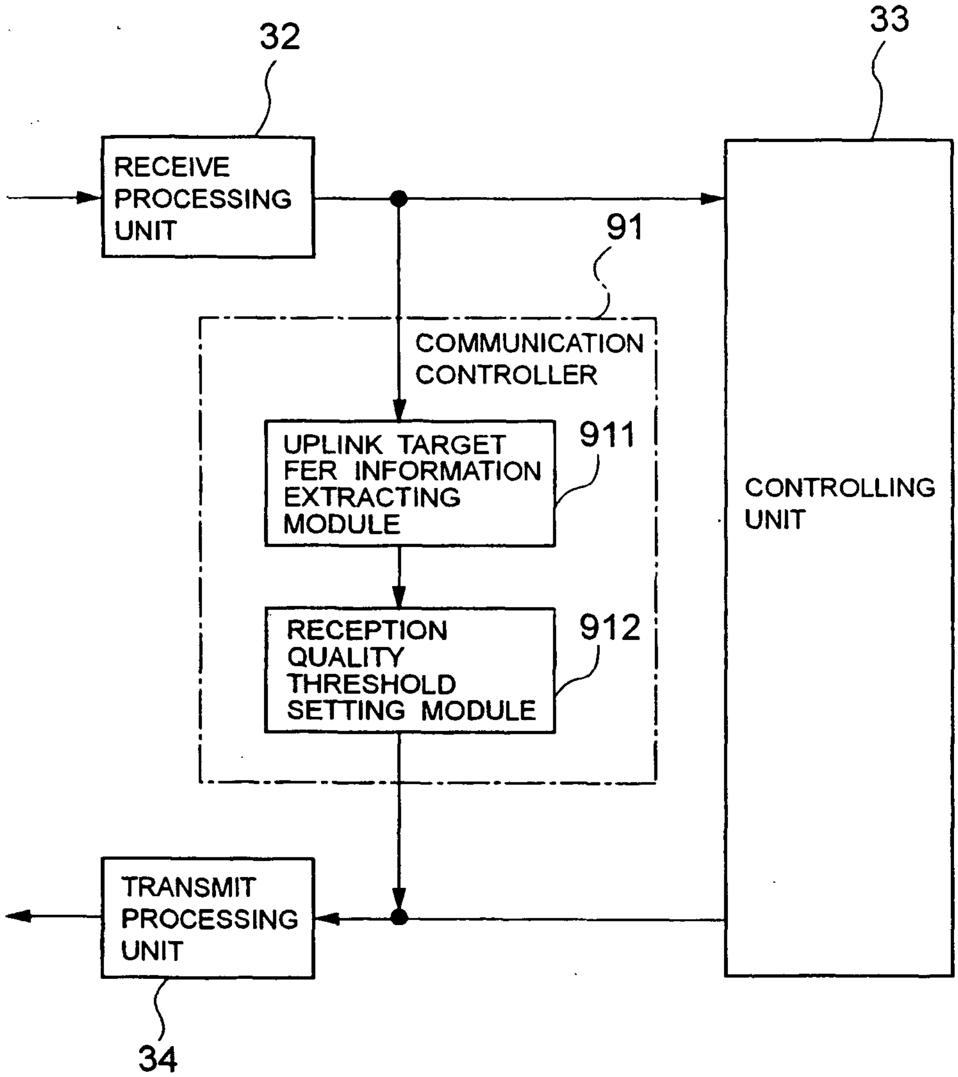
32
RECEIVE PROCESSING UNIT
33
91
COMMUNICATION CONTROLLER
UPLINK TARGET FER INFORMATION EXTRACTING MODULE
911
RECEPTION QUALITY THRESHOLD SETTING MODULE
912
CONTROLLING UNIT
TRANSMIT PROCESSING UNIT
34

FIG. 18

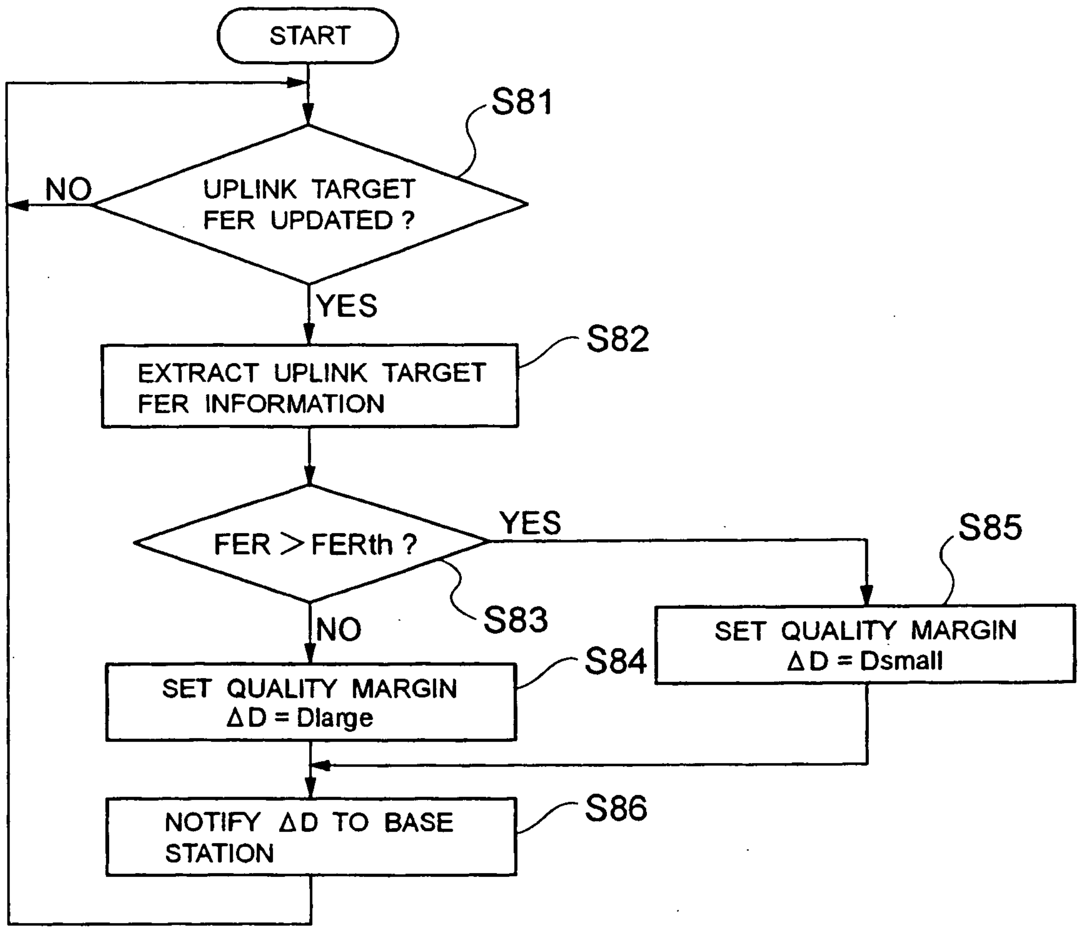
START
S81
NO
UPLINK TARGET FER UPDATED ?
YES
S82
EXTRACT UPLINK TARGET FER INFORMATION
FER > FERth ?
YES
S85
S83
NO
S84
SET QUALITY MARGIN ΔD = Dsmall
SET QUALITY MARGIN ΔD = Dlarge
S86
NOTIFY ΔD TO BASE STATION

FIG. 19

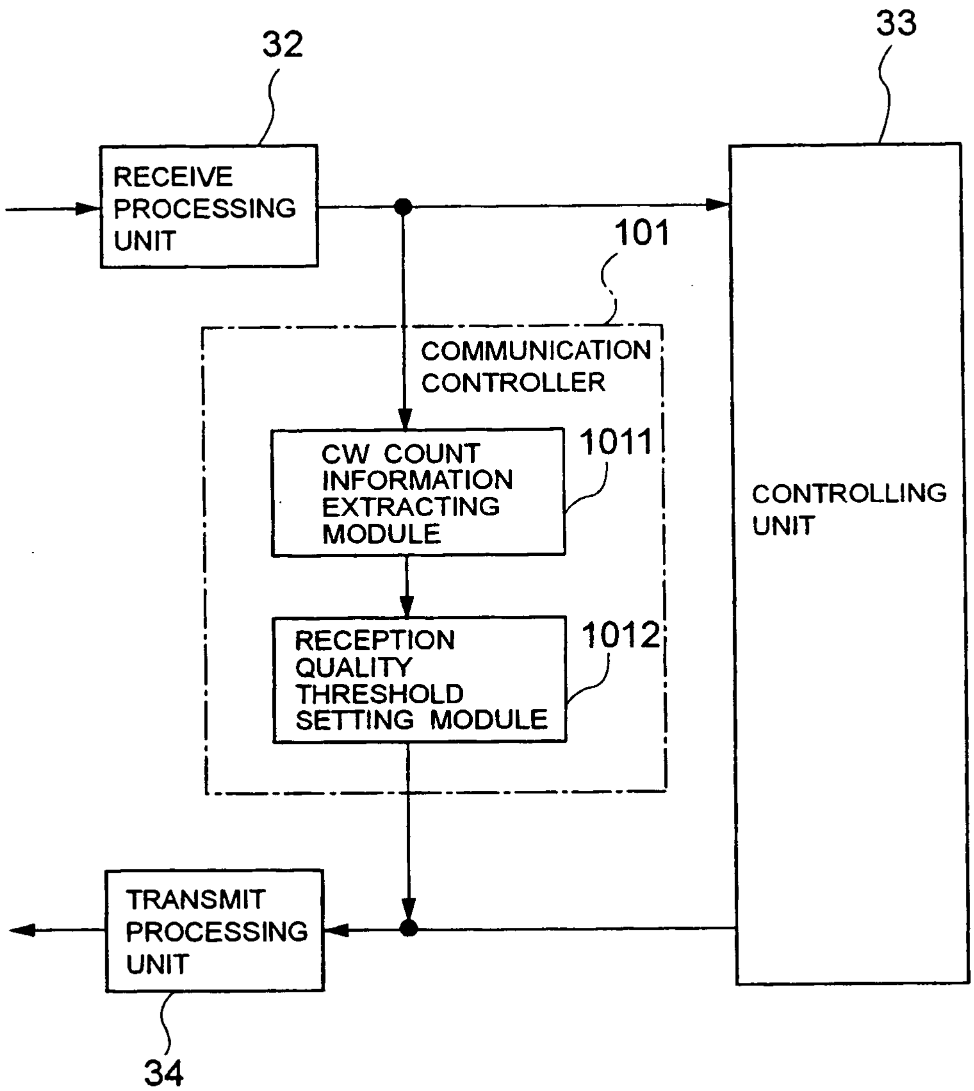
32
33
RECEIVE PROCESSING UNIT
101
COMMUNICATION CONTROLLER
CW COUNT INFORMATION EXTRACTING MODULE
1011
RECEPTION QUALITY THRESHOLD SETTING MODULE
1012
CONTROLLING UNIT
TRANSMIT PROCESSING UNIT
34

FIG. 20

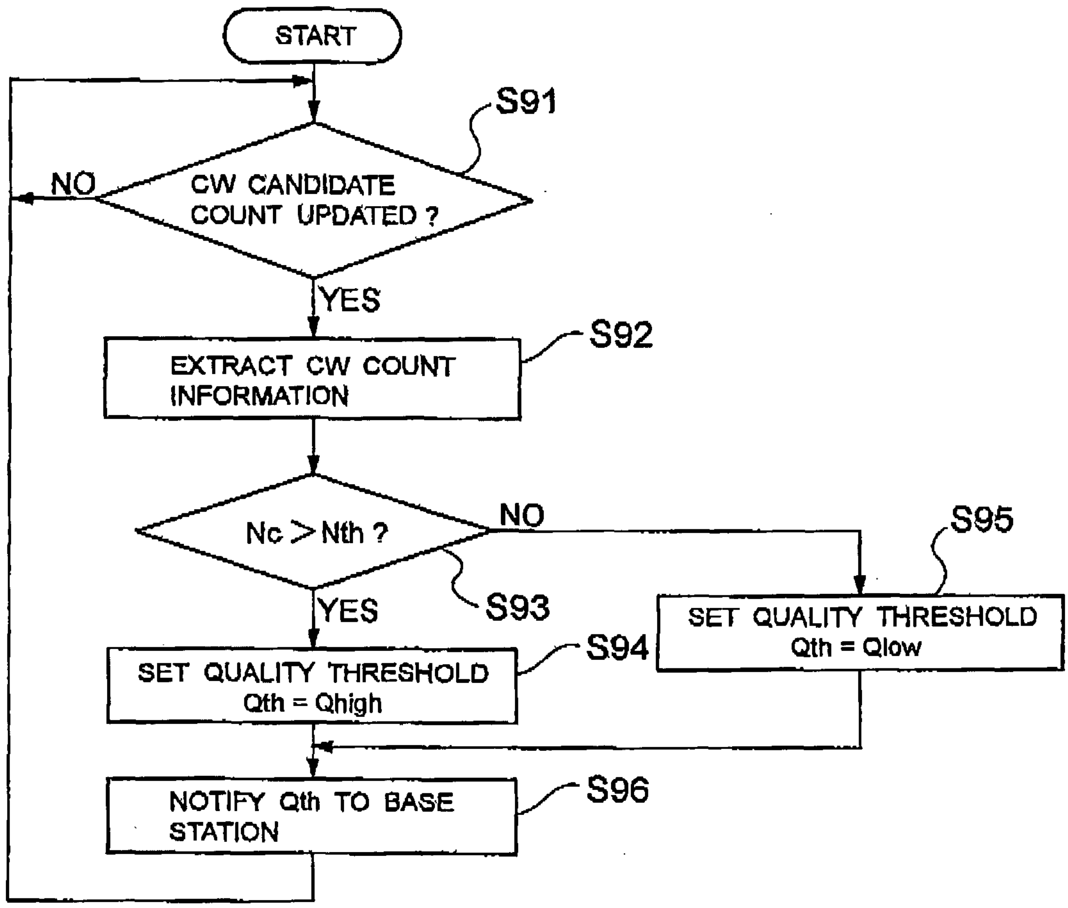
START
S91
CW CANDIDATE COUNT UPDATED ?
NO
YES
S92
EXTRACT CW COUNT INFORMATION
Nc > Nth ?
NO
S93
YES
S95
SET QUALITY THRESHOLD Qth = Qlow
S94
SET QUALITY THRESHOLD Qth = Qhigh
S96
NOTIFY Qth TO BASE STATION

FIG. 21

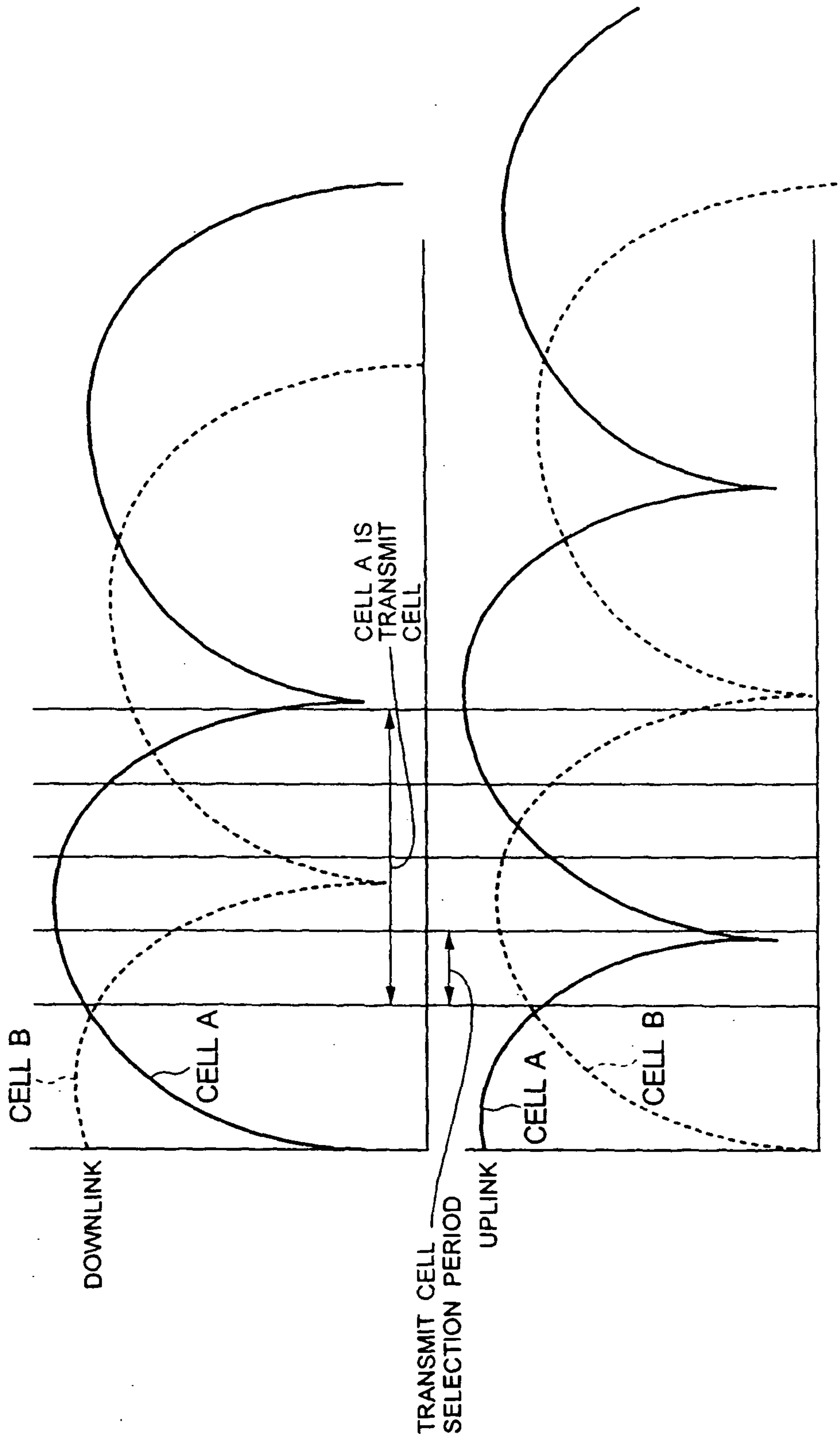
DOWNLINK
CELL B
CELL A
CELL A IS TRANSMIT CELL
TRANSMIT CELL SELECTION PERIOD
UPLINK
CELL A
CELL B

FIG. 22

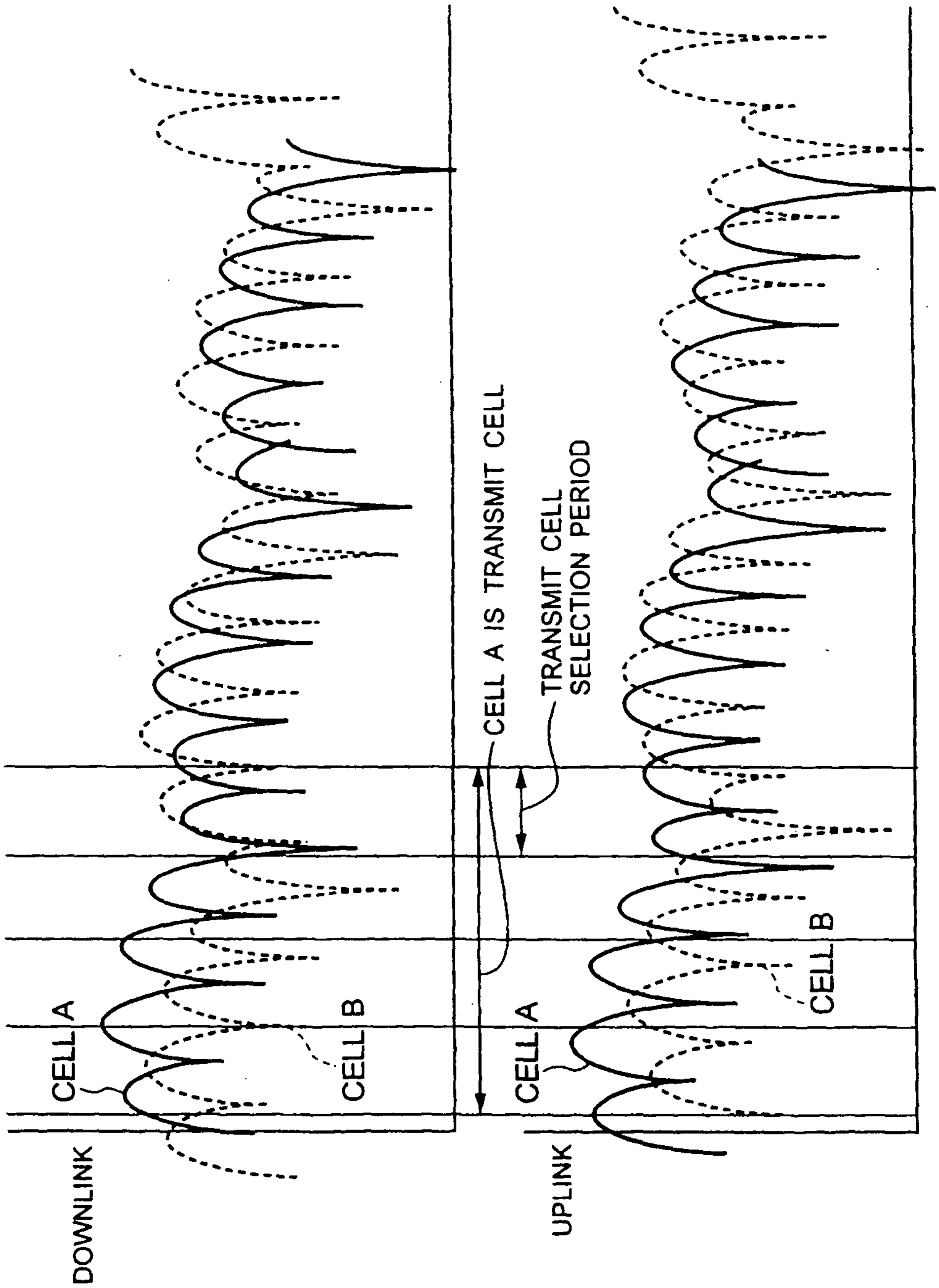
DOWNLINK
CELL A
CELL B
CELL A IS TRANSMIT CELL
TRANSMIT CELL SELECTION PERIOD
UPLINK
CELL A
CELL B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11069416 A
- WO 0199462 A1